(19) Europäisches Patentamt / European Patent Office / Office européen des brevets

(11) **EP 3 572 460 B1**

(12) **EUROPEAN PATENT SPECIFICATION**

(45) Date of publication and mention of the grant of the patent:
**24.11.2021 Bulletin 2021/47**

(21) Application number: **18741555.9**

(22) Date of filing: **17.01.2018**

(51) Int Cl.:
***B60C 11/03*** *(2006.01)* ***C08C 19/25*** *(2006.01)*
***C08L 9/00*** *(2006.01)* ***C08L 15/00*** *(2006.01)*
***B60C 1/00*** *(2006.01)* ***C08K 3/36*** *(2006.01)*
***C08K 5/54*** *(2006.01)* ***B60C 11/00*** *(2006.01)*
***C08C 19/44*** *(2006.01)* ***C08L 9/06*** *(2006.01)*

(86) International application number:
**PCT/JP2018/001213**

(87) International publication number:
**WO 2018/135530 (26.07.2018 Gazette 2018/30)**

# (54) TIRE TREAD RUBBER COMPOSITION AND PNEUMATIC TIRE

REIFENPROFILKAUTSCHUKZUSAMMENSETZUNG UND LUFTREIFEN MIT LAUFFLÄCHE

COMPOSITION DE CAOUTCHOUC POUR BANDE DE ROULEMENT DE PNEU ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.01.2017 JP 2017005883**
**26.09.2017 JP 2017184339**
**26.09.2017 JP 2017184421**

(43) Date of publication of application:
**27.11.2019 Bulletin 2019/48**

(73) Proprietor: **The Yokohama Rubber Co., Ltd.**
**Minato-ku**
**Tokyo 105-8685 (JP)**

(72) Inventor: **IIZUKA, Yusuke**
**Hiratsuka City**
**Kanagawa 254-8601 (JP)**

(74) Representative: **Dilg, Haeusler, Schindelmann Patentanwaltsgesellschaft mbH**
**Leonrodstraße 58**
**80636 München (DE)**

(56) References cited:
**WO-A1-2016/031760**
**WO-A1-2016/031769**
**WO-A1-2016/031783**
**WO-A1-2016/133030**
**JP-A- 2013 159 745**
**JP-A- 2013 237 724**
**JP-A- 2016 047 886**
**JP-A- 2016 047 887**
**JP-A- 2016 047 888**
**JP-A- 2016 047 889**
**JP-A- 2016 089 118**
**JP-A- 2017 088 864**
**US-A1- 2013 030 102**
**US-A1- 2015 133 600**
**US-A1- 2015 329 716**
**US-A1- 2016 108 210**
**US-A1- 2016 355 056**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 572 460 B1

**Description**

Field of the Invention

The present invention relates to a tire tread rubber composition and a pneumatic tire.

Background Art

In recent years, there has been a demand to reduce tire rolling resistance from the perspective of improving fuel economy when a vehicle is traveling. There has also been a demand for improving wet grip performance (braking performance on wet road surfaces) from the perspective of safety. A known method of achieving this is a method of blending silica with a rubber component constituting the tread portion of a tire to thereby achieve both low rolling resistance and wet grip performance.

However, silica exhibits low affinity with rubber components, and the cohesiveness between silica components themselves is high; therefore, if silica is simply blended with a rubber component, the silica is not dispersed, and this leads to a problem of not being able to sufficiently achieve the effect of reducing rolling resistance and the effect of improving the wet grip performance.

In response to this, Patent Document 1 describes a tire tread rubber composition containing; a diene rubber containing a specific conjugated diene rubber; silica; and a silane coupling agent. Patent Document 1 also describes that the tire tread rubber composition exhibits excellent low rolling resistance (excellent rolling characteristics), and excels in wet grip performance.

Citation List

Patent Literature

Patent Document 1: JP 2016-47887 A

Summary of Invention

Technical Problem

Meanwhile, environmental concerns and resource problems have led to a demand for even better fuel economy in vehicles, which in turn has led to a demand for further improvements in the rolling characteristics of tires. In addition, in association with improvements in required safety levels, there has also been a demand for further improvements in wet grip performance and wear resistance performance. Furthermore, an improvement in processability is also required from the perspective of the manufacturing process.

In the midst of such circumstances, when the present inventors prepared the tire tread rubber composition by referencing the examples of Patent Document 1 and evaluated the processability, rolling characteristics, wet grip performance, and wear resistance, it became clear that further improvements were desirable in consideration of demands that would likely increase in the future.

Thus, in light of the abovementioned circumstances, an object of the present invention is to provide a tire tread rubber composition having exceptional processability and offering exceptional wet grip performance, rolling characteristics, and wear resistance performance when formed into a tire, and to provide a pneumatic tire in which said tire tread rubber composition is used.

Solution to Problem

As a result of diligent research regarding the problems described above, the inventors of the present invention discovered that the abovementioned problems could be solved by compounding: a diene rubber containing a specific modified conjugated diene polymer and a specific conjugated diene rubber; silica; a silane coupling agent; and a specific aromatic modified terpene resin at predetermined proportions and thus arrived at the present invention.

That is, the present inventors discovered that the problems described above can be solved by the following configurations.

(1) A tire tread rubber composition containing: a diene rubber, silica, a silane coupling agent, and an aromatic modified terpene resin having a softening point of from 60 to 150°C;

a content of the silica being from 50 to 150 parts by mass per 100 parts by mass of the diene rubber, a content of the silane coupling agent being from 2 to 20 mass% with respect to the content of the silica;
the diene rubber containing a modified conjugated diene polymer and a specific conjugated diene rubber, a content of the modified conjugated diene polymer in the diene rubber being from 10 to 50 mass%, a content of the specific conjugated diene rubber in the diene rubber being from 50 to 90 mass%;
the modified conjugated diene polymer being a modified conjugated diene polymer obtained by modifying an active terminal of a conjugated diene polymer having a content of cis-1,4-bonds of 75 mol% or greater, using at least a hydrocarbyloxysilane compound;
the specific conjugated diene rubber being a conjugated diene rubber obtained by bonding an active terminal of a conjugated diene polymer chain and a polyorganosiloxane;
the conjugated diene polymer chain having a polymer block A and a polymer block B formed in a series with the polymer block A;
the polymer block A containing an isoprene unit and an aromatic vinyl unit, a content of the isoprene unit being from 80 to 95 mass%, a content of the aromatic vinyl unit being from 5 to 20 mass%, the weight average molecular weight being from 500 to 15000; and
the polymer block B comprising a 1,3-butadiene unit and an aromatic vinyl unit.

(2) The tire tread rubber composition according to (1) above, wherein the silane coupling agent is represented by the following General Formula (S): $(C_nH_{2n+1}O)_3\text{-Si-}C_mH_{2m}\text{-S-CO-}C_kH_{2k+1}$ —General Formula (S)
wherein, n represents an integer of 1 to 3, m represents an integer of 1 to 5, and k represents an integer of 1 to 15.
(3) The tire tread rubber composition according to (1) or (2) above, wherein the silica has a CTAB adsorption specific surface area of from 160 to 300 m2/g.
(4) A pneumatic tire that uses the tire tread rubber composition according to any one of (1) to (3) above.
(5) A pneumatic tire that uses the tire tread rubber composition according to any one of (1) to (3) above in a tire tread, wherein an average main groove depth is from 5.0 to 7.0 mm.
(6) A pneumatic tire that uses the tire tread rubber composition according to any one of (1) to (3) above in a tire tread, wherein a main groove area ratio is from 20.0 to 25.0%.

## Advantageous Effects of Invention

As described below, according to the present invention, a tire tread rubber composition having excellent processability and offering excellent wet grip performance, rolling characteristics, and wear resistance performance when formed into a tire; and a pneumatic tire in which the tire tread rubber composition is used can be provided.

## Brief Description of Drawings

FIG. 1 is a partial cross-sectional schematic view of a tire representing an aspect of a pneumatic tire according to an embodiment of the present invention.
FIG. 2 is a cross-sectional view illustrating a cross-sectional shape of a pneumatic tire according to a first preferred aspect of an embodiment of the present invention.
FIG. 3 is an enlarged cross-sectional view of a portion of a main groove 12c in the cross-sectional view of a tire 10 illustrated in FIG. 2.
FIG. 4 is a cross-sectional view illustrating a cross-sectional shape of a pneumatic tire according to a second preferred aspect of an embodiment of the present invention.

## Description of Embodiments

Hereinafter, a tire tread rubber composition and a pneumatic tire in which the tire tread rubber composition is used will be described as embodiments of the present invention.
Note that in the present specification, numeric ranges indicated using "from... to..." include the former number as the lower limit value and the latter number as the upper limit value.

## Tire Tread Rubber Composition

The tire tread rubber composition of an embodiment of the present invention (hereinafter, also referred to as "composition of an embodiment of the present invention") contains a diene rubber, silica, a silane coupling agent, and

an aromatic modified terpene resin having a softening point of from 60 to 150°C, the content of the silica is from 50 to 150 parts by mass per 100 parts by mass of the diene rubber, and the content of the silane coupling agent is from 2 to 20 mass% with respect to the content of the silica.

Here, the diene rubber contains a modified conjugated diene polymer and a specific conjugated diene rubber, the content of the modified conjugated diene polymer in the diene rubber is from 10 to 50 mass%, and the content of the specific conjugated diene rubber in the diene rubber is from 50 to 90 mass%.

Furthermore, the modified conjugated diene polymer is a modified conjugated diene polymer obtained by modifying an active terminal of a conjugated diene polymer having a content of cis-1,4-bonds of 75 mol% or greater, using at least a hydrocarbyloxysilane compound.

Furthermore, the specific conjugated diene rubber is a conjugated diene rubber obtained by bonding an active terminal of a conjugated diene polymer chain and a polyorganosiloxane;

the conjugated diene polymer chain has a polymer block A and a polymer block B formed in a series with the polymer block A;
the polymer block A contains an isoprene unit and an aromatic vinyl unit, a content of the isoprene unit is from 80 to 95 mass%, a content of the aromatic vinyl unit is from 5 to 20 mass%, and the weight average molecular weight is from 500 to 15000; and
the polymer block B contains a 1,3-butadiene unit and an aromatic vinyl unit.

The composition of an embodiment of the present invention is thought to achieve the desired effects as a result of having such a configuration. Although the reason is not clear, it is assumed to be as follows.

As described above, the composition of an embodiment of the present invention contains a diene rubber and silica, and the diene rubber includes a modified conjugated diene polymer and a specific conjugated diene rubber. Here, because the content of cis-1,4-bonds of the modified conjugated diene polymer is high, the glass transition temperature of the composition is reduced, which contributes to improving wear resistance performance. In addition, the terminal of the modified conjugated diene polymer is modified by a hydrocarbyloxysilane compound, and the terminal of the specific conjugated diene rubber is modified by a polyorganosiloxane. As a result, both terminals interact with the silica and improve the dispersibility of the silica. Furthermore, the polymer block A composed mainly of isoprene units and contained in the specific conjugated diene rubber also interacts with the silica and improves the dispersibility of the silica. In this way, the dispersibility of the silica in the composition of an embodiment of the present invention becomes extremely high, leading to improved processability, wet grip characteristics, and rolling characteristics (also referred to as "low rolling resistance" or "low heat build-up" hereafter).

As a result, it is presumed that the composition of an embodiment of the present invention exhibits excellent processability and exhibits excellent wet grip performance, rolling characteristics, and wear resistance performance when formed into a tire.

Each of the components contained in the composition of an embodiment of the present invention will be described in detail below.

Diene Rubber

The diene rubber contained in the composition of an embodiment of the present invention contains a modified conjugated diene polymer and a specific conjugated diene rubber.

Here, the content of the modified conjugated diene polymer in the diene rubber is from 10 to 50 mass%. From the perspective of achieving a more superior effect of an embodiment of the present invention, within this range, the content is preferably from 15 to 40 mass%, and more preferably from 20 to 30 mass%.

The content of the specific conjugated diene rubber in the diene rubber is from 50 to 90 mass%. From the perspective of achieving a more superior effect of an embodiment of the present invention, within this range, the content is preferably from 60 to 85 mass%, and more preferably from 70 to 80 mass%.

Furthermore, from the perspective of achieving a more superior effect of an embodiment of the present invention, the proportion of the content of the modified conjugated diene polymer with respect to the content of the specific conjugated diene rubber is preferably from 10 to 90 mass%, more preferably from 20 to 80 mass%, even more preferably from 30 to 70 mass%, and particularly preferably from 40 to 60 mass%.

Modified Conjugated Diene Polymer

The modified conjugated diene polymer contained in the diene rubber is a modified conjugated diene polymer obtained by using at least a hydrocarbyloxysilane compound to modify an active terminal of a conjugated diene polymer having a content of cis-1,4-bonds (cis-1,4-bond content) of 75 mol% or greater. From the perspective of achieving a

more superior effect of an embodiment of the present invention, the abovementioned cis-1,4-bond content is preferably 80 mol% or greater, more preferably 90 mol% or greater, and even more preferably 95 mol% or greater. The upper limit of the cis-1,4-bond content is not particularly limited and is 100 mol%.

Note that in the present specification, the cis-1,4-bond content of the conjugated diene polymer refers to a proportion (mol%) of conjugated diene units of cis-1,4-bonds relative to all conjugated diene units contained in the conjugated diene polymer.

Furthermore, from the perspective of achieving a more superior effect of an embodiment of the present invention, the content of trans-1,4-bonds (trans-1,4-bond content) in the conjugated diene polymer is preferably 25 mol% or less, more preferably 20 mol% or less, even more preferably 10 mol% or less, and particularly preferably 5 mol% or less. The lower limit of the trans-1,4-bond content is not particularly limited and is 0%.

Note that in the present specification, the trans-1,4-bond content of the conjugated diene polymer refers to a proportion (mol%) of conjugated diene units of trans-1,4-bonds relative to all conjugated diene units contained in the conjugated diene polymer.

Furthermore, from the perspective of achieving a more superior effect of an embodiment of the present invention, the content of vinyl bonds (vinyl bond content) in the conjugated diene polymer is preferably not greater than 25 mol%, more preferably not greater than 10 mol%, even more preferably not greater than 5 mol%, and particularly preferably not greater than 1 mol%. The lower limit of the vinyl bond content is not particularly limited and is 0%.

Note that in the present specification, the vinyl bond content of the conjugated diene polymer refers to a proportion (mol%) of conjugated diene units of vinyl bonds relative to all conjugated diene units contained in the conjugated diene polymer.

The conjugated diene polymer having an active terminal with a cis-1,4-bond content of 75 mol% or greater and used as an intermediate (intermediate polymer) of a modified conjugated diene polymer is as described in paragraphs from to

of JP 5965657 B, the details of which are incorporated in the present specification by reference.

The modified conjugated diene polymer used in the present invention is formed by using at least a hydrocarbyloxysilane compound to modify an active terminal of a conjugated diene polymer (intermediate polymer) having the active terminal with a content of cis-1,4-bonds of 75 mol% or greater, and there are five aspects as described below.

A first aspect is a modified conjugated diene polymer obtained by subjecting the active terminal of the abovementioned intermediate polymer to primary modification by a hydrocarbyloxysilane compound and then to secondary modification by a hydrocarbyloxysilane compound in the presence of a condensation accelerator.

A second aspect is a modified conjugated diene polymer obtained by subjecting the active terminal of the abovementioned intermediate polymer to primary modification by a hydrocarbyloxysilane compound and then reacting with a carboxylic acid partial ester of a polyhydric alcohol.

A third aspect is a modified conjugated diene polymer obtained by subjecting an active terminal of the intermediate polymer to primary modification by a hydrocarbyloxysilane compound and then further subjecting the hydrocarbyloxysilane compound residue introduced at the terminal and the unreacted hydrocarbyloxysilane compound to a condensation reaction in the presence of a condensation accelerator.

A fourth aspect is the modified conjugated diene polymer according to the first aspect, further reacted with a carboxylic acid partial ester of a polyhydric alcohol after the secondary modification.

A fifth aspect is the modified conjugated diene polymer according to the third aspect, further reacted with a carboxylic acid partial ester of a polyhydric alcohol after the condensation reaction.

In each of the above aspects, the intermediate polymer that is used in the reaction of the primary modification is preferably such that at least 10% of the polymer chain has a living property.

Each of the aspects and hydrocarbyloxysilane compounds are as described in paragraphs from [0022] to [0061] of JP 5965657 B, the details of which are incorporated in the present specification by reference.

As the modified conjugated diene polymer produced in this manner, a modified polybutadiene having a cis-1,4-bond content of 75 mol% or greater is suitable from the perspective of the performance of the tire tread rubber composition.

The modified conjugated diene polymer has a significant dispersion improving effect with respect to a reinforcing filler, particularly silica, overall, reduces the dynamic storage modulus (E') across the entire temperature range, and in particular, enables an increase in the reduction of E' at the low-temperature side. Therefore, the wet grip performance of the tire can be further improved.

Furthermore, the reduction effect is significant even with respect to a loss factor (tan $\delta$), and when compared with a case in which an ordinary polybutadiene rubber is used, the modified conjugated diene polymer can further increase the reduction at high temperatures (60°C) while minimizing the reduction at 0°C, and therefore the modified conjugated diene polymer simultaneously acts to improve the balance between the wet grip performance and rolling characteristics even with a high compounding proportion of the filled silica. Furthermore, wear resistance can be improved due to the effect of improving the dispersion of the reinforcing filler.

Specific Conjugated Diene Rubber

The specific conjugated diene rubber contained in the diene rubber is a conjugated diene rubber obtained by bonding an active terminal of a conjugated diene polymer chain and a polyorganosiloxane.

Here, the conjugated diene polymer chain has a polymer block A and a polymer block B formed in a series with the polymer block A;

the polymer block A contains an isoprene unit and an aromatic vinyl unit, a content of the isoprene unit is from 80 to 95 mass%, a content of the aromatic vinyl unit is from 5 to 20 mass%, and the weight average molecular weight is from 500 to 15000; and

the polymer block B contains a 1,3-butadiene unit and an aromatic vinyl unit.

In the specific conjugated diene rubber, the conjugated diene polymer chain, the polymer block A and polymer block B contained in the conjugated diene polymer chain, and the polyorganosiloxane are as described below.

From the perspective of achieving a more superior effect of an embodiment of the present invention, the specific conjugated diene rubber is preferably a conjugated diene rubber produced by a conjugated diene rubber production method provided with the following steps A, B, and C in this order.

- Step A: Forming a polymer block A having an active terminal, by polymerizing a monomer mixture containing isoprene and an aromatic vinyl, wherein the isoprene unit content is from 80 to 95 mass%, the aromatic vinyl unit content is from 5 to 20 mass%, and the weight average molecular weight is from 500 to 15000.
- Step B: Obtaining a conjugated diene-based polymer chain having an active terminal and having the above-described polymer block A and polymer block B, by continuing a polymerization reaction of mixing the polymer block A and a monomer mixture containing 1,3-butadiene and an aromatic vinyl and by forming, in series with the polymer block A, a polymer block B having an active terminal.
- Step C: Reacting a polyorganosiloxane with the active terminal of the conjugated diene polymer chain.

Specific examples of each of the steps are as described in paragraphs from [0017] to [0054] of JP 2016-47883 A, the details of which are incorporated in the present specification by reference.

The specific conjugated diene rubber contains a structure in which three or more conjugated diene polymer chains are bonded and which is produced by reacting a conjugated diene polymer chain having an active terminal with the polyorganosiloxane described above (hereinafter the "structure in which three or more conjugated diene polymer chains are bonded and which is produced by reacting a conjugated diene polymer chain having an active terminal with the polyorganosiloxane described above" may be referred to as simply a "structure in which three or more conjugated diene polymer chains are bonded") at an amount of preferably from 5 to 40 mass%, more preferably from 5 to 30 mass%, and particularly preferably from 10 to 20 mass%. When the proportion of the structure in which three or more conjugated diene polymer chains are bonded is within the aforementioned range, the coagulability and drying properties during manufacturing becomes favorable, and when silica is compounded therewith, a tire tread rubber composition better excelling in processability and a tire better excelling in low heat build-up can be provided. Note that the proportion (mass percentage) of the structure, in which the three or more conjugated diene polymer chains are bonded, to the total amount of the ultimately obtained specific conjugated diene rubber is expressed as a coupling ratio of three or more branches of the conjugated diene polymer chains. This coupling ratio may be measured by gel permeation chromatography (in terms of polystyrene). From a chart obtained by gel permeation chromatography measurements, an area ratio of a peak portion having a peak top molecular weight of 2.8 times or more the peak top molecular weight indicated by the peak of the smallest molecular weight to a total elution area is taken as the coupling ratio of three or more branches of the conjugated diene polymer chain.

The content of the aromatic vinyl unit of the abovementioned specific conjugated diene rubber is not particularly limited; however, from the perspective of achieving a more superior effect of an embodiment of the present invention, the content is preferably from 38 to 48 mass% and more preferably from 40 to 45 mass%.

The vinyl bond content of the specific conjugated diene rubber is not particularly limited; however, from the perspective of achieving a more superior effect of an embodiment of the present invention, the content is preferably from 20 to 35 mass% and more preferably from 25 to 30 mass%. Note that the vinyl bond content refers to the proportion (mass%) occupied by the vinyl bonds among the conjugated diene units contained in the specific conjugated diene rubber.

The weight average molecular weight (Mw) of the specific conjugated diene rubber is not particularly limited, but from the perspective of achieving a more superior effect of an embodiment of the present invention, the weight average molecular weight is preferably from 500000 to 800000 and more preferably from 600000 to 700000, as a value in terms of polystyrene measured by gel permeation chromatography (GPC).

The molecular weight distribution expressed as a ratio (Mw/Mn) of the weight average molecular weight (Mw)

to the number average molecular weight (Mn) of the specific conjugated diene rubber is preferably from 1.1 to 3.0, more preferably from 1.2 to 2.5, and particularly preferably from 1.2 to 2.2. Note that both Mw and Mn are values in terms of polystyrene as measured by GPC.

The Mooney viscosity ($ML_{1+4}$, 100°C) of the specific conjugated diene rubber is preferably from 20 to 100, more preferably from 30 to 90, and particularly preferably from 35 to 80. When the specific conjugated diene rubber is an oil-extended rubber, the Mooney viscosity of that oil-extended rubber is preferably set to the abovementioned range.

Other Rubber Component

The abovementioned diene rubber may contain a rubber component (other rubber component) besides the modified conjugated diene polymer described above and specific conjugated diene rubber described above. Such other rubber component is not particularly limited, but examples thereof include, besides the modified conjugated diene polymer and specific conjugated diene rubber described above, aromatic vinyl-conjugated diene copolymer rubber, natural rubber, isoprene rubber (IR), butadiene rubber (BR), acrylonitrile-butadiene copolymer rubber (NBR), butyl rubber (IIR), halogenated butyl rubber (Br-IIR, Cl-IIR), chloroprene rubber (CR), and the like. Among these, BR is preferable. Examples of the abovementioned aromatic vinyl-conjugated diene copolymer rubber include, besides the specific conjugated diene rubber, styrene-butadiene copolymer rubber (SBR), styrene-isoprene copolymer rubber, and the like.

The content of the other rubber component in the abovementioned diene rubber is not particularly limited but is preferably from 0 to 30 mass%.

Silica

The silica contained in the composition of an embodiment of the present invention is not particularly limited, and any conventionally known silica that is blended in rubber compositions for use in tires or the like can be used.

Examples of the silica include wet silica, dry silica, fumed silica, diatomaceous earth, and the like. One type of the silica may be used alone, or two or more types of silicas may be used in combination.

The cetyltrimethylammonium bromide (CTAB) adsorption specific surface area of the abovementioned silica is not particularly limited, but from the perspective of achieving a more superior effect of an embodiment of the present invention, the CTAB adsorption specific surface area is preferably from 100 to 400 $m^2$/g, more preferably from 160 to 350 $m^2$/g, and even more preferably from 180 to 350 $m^2$/g.

Note that in the present specification, the CTAB adsorption specific surface area is the amount of CTAB adsorbed onto the silica surface as measured according to JIS K6217-3:2001 "Part 3: Determination of Specific Surface Area—CTAB Adsorption Methods."

With respect to the composition of an embodiment of the present invention, the content of the silica is from 50 to 150 parts by mass per 100 parts by mass of the diene rubber. Of this range, the silica content is preferably from 70 to 130 parts by mass from the perspective of achieving a more superior effect of an embodiment of the present invention.

Silane Coupling Agent

The silane coupling agent contained in the composition of an embodiment of the present invention is not particularly limited as long as the silane coupling agent is a silane compound having a hydrolyzable group and an organic functional group.

The hydrolyzable group is not particularly limited; however, examples thereof include alkoxy groups, phenoxy groups, carboxyl groups, alkenyloxy groups, and the like. Among these, alkoxy groups are preferable. When the hydrolyzable group is an alkoxy group, the number of carbon atoms of the alkoxy group is preferably from 1 to 16 and more preferably from 1 to 4. Examples of the alkoxy group having from 1 to 4 carbons include a methoxy group, ethoxy group, propoxy group, and the like.

The organic functional group is not particularly limited but is preferably a group that can form a chemical bond with an organic compound. Examples thereof include epoxy groups, vinyl groups, acryloyl groups, methacryloyl groups, amino groups, mercapto groups, and the like, and of these, mercapto groups are preferable.

A single type of silane coupling agent may be used alone, or two or more types may be used in a combination.

The silane coupling agent is preferably a sulfur-containing silane coupling agent.

Specific examples of the silane coupling agent are bis-[3-(triethoxysilyl)-propyl]tetrasulfide, bis-[3-(trimethoxysilyl)-propyl]tetrasulfide, bis-[3-(triethoxysilyl)-propyl]disulfide, mercaptopropyltrimethoxysilane, mercaptopropyl-triethoxysilane, 3-trimethoxysilylpropyl-N,N-dimethylthiocarbamoyl-tetrasulfide, trimethoxysilylpropyl-mercaptobenzothiazole tetrasulfide, triethoxysilylpropyl-methacrylate-monosulfide, dimethoxymethylsilylpropyl-N,N-dimethylthiocarbamoyl-tetrasulfide, and the like. One of these can be used alone, or a combination of two or more can be used.

The silane coupling agent is preferably expressed by the following General Formula (S) from the perspective

of achieving a more superior effect of an embodiment of the present invention.

$$(C_nH_{2n+1}O)_3\text{-Si-}C_mH_{2m}\text{-S-CO-}C_kH_{2k+1} \text{ — } \quad \text{General Formula (S)}$$

In General Formula (S), n represents an integer of from 1 to 3, m represents an integer of from 1 to 5 (preferably an integer of from 2 to 4), and k represents an integer of from 1 to 15 (preferably an integer of from 5 to 10).

Furthermore, from the perspective of achieving a more superior effect of an embodiment of the present invention, the silane coupling agent preferably has a polyether chain.

Here, a polyether chain is a side chain having two or more ether bonds, and specific examples thereof include a side chain having a total of two or more structural units of $-R^a-O-R^b-$. Here, in the abovementioned structural unit, $R^a$ and $R^b$ each independently represent a linear or branched alkylene group, a linear or branched alkenylene group, a linear or branched alkynylene group, or a substituted or unsubstituted arylene group. Among these, a linear alkylene group is preferable.

The content of the silane coupling agent in the composition of an embodiment of the present invention is from 2 to 20 mass% relative to the content of the above-described silica. From the perspective of achieving a more superior effect of an embodiment of the present invention, of the abovementioned range, the content is preferably from 5 to 15 mass% and more preferably from 8 to 12 mass%.

Aromatic Modified Terpene Resin

The aromatic modified terpene resin contained in the composition of an embodiment of the present invention is not particularly limited as long as the aromatic modified terpene resin is the one that has a softening point of from 60 to 150°C (hereinafter, also referred to as a "specific aromatic modified terpene resin"). From the perspective of achieving a more superior effect of an embodiment of the present invention, the abovementioned softening point is preferably from 100 to 140°C.

Note that the softening point is a Vicat softening point measured in accordance with JIS K7206:1999.

With respect to the composition of an embodiment of the present invention, the content of the abovementioned aromatic modified terpene resin is not particularly limited, but from the perspective of achieving a more superior effect of an embodiment of the present invention, the content thereof is, per 100 parts by mass of the abovementioned diene rubber, preferably from 1 to 30 parts by mass, more preferably from 5 to 20 parts by mass, even more preferably from 5 to 15 parts by mass, and particularly preferably from 8 to 12 parts by mass.

Optional Components

The composition of an embodiment of the present invention may further contain other components (optional components) as necessary within a scope that does not impair the effect or purpose thereof.

Examples of the optional components include various additives typically used in rubber compositions, such as carbon black, fillers, zinc oxide (zinc white), stearic acid, anti-aging agents, waxes, processing aids, oils, liquid polymers, thermosetting resins, vulcanizing agents (e.g. sulfur), and vulcanization accelerators.

Carbon Black

From the perspective of achieving a more superior effect of an embodiment of the present invention, the composition of an embodiment of the present invention preferably contains carbon black.

The carbon black is not particularly limited, and for example, carbon blacks of various grades, such as SAF-HS, SAF, ISAF-HS, ISAF, ISAF-LS, IISAF-HS, HAF-HS, HAF, HAF-LS, FEF, and the like can be used.

The nitrogen adsorption specific surface area ($N_2SA$) of the carbon black is not particularly limited but is preferably from 50 to 200 $m^2/g$ and more preferably from 70 to 150 $m^2/g$ from the perspective of achieving a more superior effect of an embodiment of the present invention.

Note that the nitrogen adsorption specific surface area ($N_2SA$) is a value of the amount of nitrogen adsorbed onto the surface of carbon black, measured in accordance with JIS K6217-2:2001 (Part 2: Determination of Specific Surface Area by Nitrogen Adsorption Methods—Single-Point Procedures).

The content of the carbon black is not particularly limited, but from the perspective of achieving a more superior effect of an embodiment of the present invention, the content is preferably from 1 to 200 parts by mass and more preferably from 3 to 100 parts by mass, per 100 parts by mass of the diene rubber described above.

Method for Preparing the Tire Tread Rubber Composition The method for preparing the composition of an embodiment of the present invention is not particularly limited, and specific examples thereof include a method whereby each of the above-mentioned components is kneaded using a well-known method and device (e.g. Banbury mixer,

kneader, and roll). When the composition of an embodiment of the present invention contains sulfur or a vulcanization accelerator, preferably, the components other than the sulfur and vulcanization accelerator are mixed first at a high temperature (preferably from 100 to 155°C) and then cooled, after which the sulfur or the vulcanization accelerator is mixed.

In addition, the composition of an embodiment of the present invention can be vulcanized or crosslinked under conventionally known vulcanizing or crosslinking conditions.

Pneumatic Tire

The pneumatic tire of an embodiment of the present invention (hereinafter, also referred to as the "tire of an embodiment of the present invention") is a pneumatic tire produced using the composition of an embodiment of the present invention described above. Of such pneumatic tires, the pneumatic tire of an embodiment of the present invention is preferably a pneumatic tire for which the rubber composition of an embodiment of the present invention is used in the tire tread.

FIG. 1 is a partial cross-sectional schematic view of a tire representing an aspect of a pneumatic tire according to one embodiment of the present invention, but the pneumatic tire of the present invention is not limited to the aspect illustrated in FIG. 1.

In FIG. 1, reference sign 1 denotes a bead portion, reference sign 2 denotes a sidewall portion, and reference sign 3 denotes a tire tread portion.

In addition, a carcass layer 4, in which a fiber cord is embedded, is mounted between a left-right pair of bead portions 1, and end portions of the carcass layer 4 are wound by being folded around bead cores 5 and a bead filler 6 from an inner side to an outer side of the tire.

In the tire tread portion 3, a belt layer 7 is disposed along the entire circumference of the tire on the outer side of the carcass layer 4. Additionally, a rim cushion 8 is disposed at a portion of the bead portion 1 that is in contact with a rim.

The tire tread portion 3 is formed from the composition according to an embodiment of the present invention described above.

The pneumatic tire according to an embodiment of the present invention can be produced, for example, in accordance with a known method. In addition to ordinary air or an air with which the partial pressure of oxygen is adjusted, inert gases such as nitrogen, argon, and helium can be used as the gas with which the tire is filled.

First Preferred Aspect

A first preferred aspect of a tire according to an embodiment of the present invention is a pneumatic tire in which the composition according to an embodiment of the present invention described above is used in a tire tread, wherein an average main groove depth is from 5.0 to 7.0 mm (hereinafter, also referred to as "a pneumatic tire 1 of an embodiment of the present invention" or "a tire 1 of an embodiment of the present invention").

The tire 1 of an embodiment of the present invention exhibits more superior wear resistance performance, rolling performance, noise performance, dry steering stability performance, wet steering stability performance, and durability performance. Although the reason is not clear, it is assumed to be as follows.

As described above, the tire tread rubber composition of the tire 1 of an embodiment of the present invention contains a diene rubber and silica, and the diene rubber includes a modified conjugated diene polymer and a specific conjugated diene rubber. Here, because the content of cis-1,4-bonds of the modified conjugated diene polymer is high, the glass transition temperature of the composition is reduced, which contributes to improving wear resistance performance. In addition, the terminal of the modified conjugated diene polymer is modified by a hydrocarbyloxysilane compound, and the terminal of the specific conjugated diene rubber is modified by a polyorganosiloxane. As a result, both terminals interact with the silica and improve the dispersibility of the silica. Furthermore, the polymer block A composed mainly of isoprene units and contained in the specific conjugated diene rubber also interacts with the silica and improves the dispersibility of the silica. In this way, the dispersibility of the silica in the abovementioned tire tread rubber composition is extremely high and is thought to lead to improved rolling performance and wet steering stability performance. It is also thought that the dry steering stability performance and durability performance are improved by forming a strong network between the modified conjugated diene polymer, the specific conjugated diene rubber, and the silica described above. Additionally, it is also thought that because the average main groove depth of the tire 1 of an embodiment of the present invention is in a range suitable for the aforementioned strong network, the durability performance described above is sufficiently exhibited.

As a result, it is assumed that the tire 1 of an embodiment of the present invention exhibits the effects described above.

Next, the tire 1 of an embodiment of the present invention will be described while referring to the drawings. However, the tire 1 of an embodiment of the present invention is not limited thereto.

FIG. 2 is a cross-sectional view illustrating a cross-sectional shape of the pneumatic tire 1 according to an embodiment of the present invention.

A pneumatic tire (hereinafter, also referred to as simply "tire") 10 illustrated in FIG. 2 includes a tread portion 12, a shoulder portion 14, a sidewall portion 16, and a bead portion 18 as major constituents.

Herein, as indicated by arrows in FIG. 2, "tire lateral direction" refers to a direction parallel to a rotation axis (not illustrated) of the tire, and "tire radial direction" refers to a direction orthogonal to the rotation axis. "Tire circumferential direction" refers to a rotating direction with the rotation axis as the axis at the center of rotation.

Additionally, "tire inner side" refers to a tire inner surface side facing a cavity region R that applies, in the tire radial direction, a predetermined internal pressure to a lower side of the tire in FIG. 2, that is, to the tire. "Tire outer side" refers to a tire outer surface side that is visible to the user on an upper side of the tire in FIG. 2, that is, on the side opposite the tire inner circumferential surface. The reference sign CL in FIG. 2 denotes a tire equatorial plane, and the tire equatorial plane CL is a plane that is orthogonal to the rotation axis of the pneumatic tire 10 and passes through the center of the pneumatic tire in the tire lateral direction.

The tire 10 mainly includes a carcass layer 20, a belt layer 22, a belt auxiliary reinforcing layer 24, a bead core 28, a bead filler 30, a tread rubber layer 32 constituting the tread portion 12, a sidewall rubber layer 34 constituting the sidewall portion 16, a rim cushion rubber layer 36, and an inner liner rubber layer 38 provided at the tire inner circumferential surface.

The tread rubber layer 32 is formed from the composition according to an embodiment of the present invention described above. That is, the tire 10 is a tire (pneumatic tire) that uses the composition of an embodiment of the present invention described above in the tire tread.

The thickness of the tread rubber layer 32 is not particularly limited but is preferably from 6 to 10 mm because at such thickness, more superior levels of wear resistance performance, rolling performance, noise performance, dry steering stability performance, wet steering stability performance, and durability performance are exhibited. Hereinafter, "more superior levels of wear resistance performance, rolling performance, noise performance, dry steering stability performance, wet steering stability performance, and durability performance are exhibited" is also referred to as "a more superior effect 1 of an embodiment of the present invention is exhibited".

The tread portion 12 is provided with a land portion 12b that constitutes a tread surface 12a on the tire outer side, with a main groove 12c formed continuously in the tire circumferential direction, and with a plurality of lug grooves (not illustrated) extending in the tire lateral direction, and the land portion 12b is defined by the main groove 12c and lug grooves. A tread pattern is formed in the tread surface 12a by the main groove 12c and the land portion 12b. Here, the average main groove depth of the main groove 12c is from 5.0 to 7.0 mm. The details of the average main groove depth are described below. The tire 10 may have grooves (subsidiary grooves, sipes, etc.) other than the main groove and the lug grooves.

A pair of the left and right bead cores 28 around which the carcass layer 20 is folded and that function to fix the tire 10 to the wheel is provided in the bead portion 18. Additionally, the bead filler 30 is also provided in the bead portion 18 so as to contact the bead core 28. Therefore, the bead core 28 and the bead filler 30 are sandwiched by a body portion 20a and a folded back portion 20b of the carcass layer 20.

The carcass layer 20 extends in the tire lateral direction, from a portion corresponding to the tread portion 12 through portions corresponding to the shoulder portion 14 and the sidewall portion 16 to the bead portion 18, and forms a skeleton of the tire 10.

The carcass layer 20 has a configuration in which reinforcing cords are arranged and covered with a cord coating rubber. The carcass layer 20 is folded back at the pair of the left and right bead cores 28 from the tire inner side to the tire outer side to form an end portion 20e in a region of the sidewall portion 16 and includes the body portion 20a and the folded back portion 20b that are delimited by the bead core 28. In other words, in the present embodiment, a single layer of the carcass layer 20 is mounted between the pair of the left and right bead portions 18. The number of the carcass layers 20 is not limited to one layer, and a plurality of layers may be used depending on the structure and application. The carcass layer 20 is preferably a single layer structure (1 ply) from the perspective of weight reduction.

Additionally, the carcass layer 20 may be configured by one sheet material or a plurality of sheet materials. When configured by a plurality of sheet materials, the carcass layer 20 has a joint portion (splice portion).

Organic fiber cords of the carcass layer 20 are formed, for example, from polyethylene terephthalate (PET), polyethylene naphthalate (PEN), rayon, or nylon.

As the cord coating rubber of the carcass layer 20, preferably one or more types of rubber selected from natural rubber (NR), styrene-butadiene rubber (SBR), butadiene rubber (BR), and isoprene rubber (IR) are used. Furthermore, as these rubbers, a rubber that has been terminal modified by a functional group containing an element such as nitrogen, oxygen, fluorine, chlorine, silicon, phosphorus, or sulfur, including, for example, an amine group, an amide group, a hydroxyl group, an ester group, a ketone group, a siloxy group, or an alkylsilyl group; or a rubber that has been terminal modified by an epoxy can be used.

Examples of the carbon black compounded in these rubbers include carbon blacks having an iodine adsorption

amount of from 20 to 100 (g/kg), preferably from 20 to 50 (g/kg), a dibutyl phthalate (DBP) absorption amount of from 50 to 135 ($cm^3$/100 g), preferably from 50 to 100 ($cm^3$/100 g), and a cetyltrimethylammonium bromide (CTAB) adsorption specific surface area of from 30 to 90 ($m^2$/g), preferably from 30 to 45 ($m^2$/g). Note that, in the present specification, the amount of iodine adsorbed by the carbon black is measured in accordance with JIS K6217-1:2008. Also, the DBP absorption amount is measured in accordance with JIS K6217-4:2008. The CTAB adsorption specific surface area is measured in accordance with JIS K6217-3:2001.

The amount of sulfur that is used is, for example, from 1.5 to 4.0 parts by mass and preferably from 2.0 to 3.0 parts by mass per 100 parts by mass of the rubber.

Average Main Groove Depth

As described above, in the tire 1 of an embodiment of the present invention, the average main groove depth is from 5.0 to 7.0 mm.

Here, the average main groove depth is an arithmetic average of the main groove depth. For example, in the case of the tire 10 illustrated in FIG. 2, the average main groove depth is the arithmetic average of the main groove depths of the four main grooves 12c. Note that when the number of main grooves is one, the average main groove depth refers to the main groove depth of the main groove thereof.

The main groove depth refers to the maximum value of a depth from the tread surface to a groove bottom of the main groove. The main groove depth is measured disregarding any partial uneven portions formed in the groove bottom.

The main groove depth will be described in detail using the drawings. FIG. 3 is an enlarged cross-sectional view of a portion of the main groove 12c from the cross-sectional view of the tire 10 illustrated in FIG. 2. As illustrated in FIG. 3, a main groove depth D of the main groove 12c is the maximum value of the groove depth of the main groove 12c from the tread surface 12a.

Note that in the present specification, the main groove refers to a groove in the circumferential direction having a groove width of not less than 5 mm. The upper limit of the groove width of the main groove is not particularly limited, but from the perspective of achieving the more superior effect 1 of an embodiment of the present invention, the upper limit is preferably 30 mm or less.

Second Preferred Aspect

A second preferred aspect of a tire according to an embodiment of the present invention is a pneumatic tire in which the composition of an embodiment of the present invention described above is used in a tire tread, wherein a main groove area ratio is from 20.0 to 25.0% (hereinafter, also referred to as "a pneumatic tire 2 of an embodiment of the present invention" or "a tire 2 of an embodiment of the present invention").

The tire 2 of an embodiment of the present invention exhibits more superior wear resistance performance, rolling performance, dry steering stability performance, wet steering stability performance, and durability performance. Although the reason is not clear, it is assumed to be as follows.

As described above, the tire tread rubber composition of the tire 2 of an embodiment of the present invention contains a diene rubber and silica, and the diene rubber includes a modified conjugated diene polymer and a specific conjugated diene rubber. Here, because the content of cis-1,4-bonds of the modified conjugated diene polymer is high, the glass transition temperature of the composition is reduced, which contributes to improving wear resistance performance. In addition, the terminal of the modified conjugated diene polymer is modified by a hydrocarbyloxysilane compound, and the terminal of the specific conjugated diene rubber is modified by a polyorganosiloxane. As a result, both terminals interact with the silica and improve the dispersibility of the silica. Furthermore, the polymer block A composed mainly of isoprene units and contained in the specific conjugated diene rubber also interacts with the silica and improves the dispersibility of the silica. In this way, the dispersibility of the silica in the abovementioned tire tread rubber composition is extremely high and is thought to lead to improved rolling performance and wet steering stability performance. It is also thought that the dry steering stability performance and durability performance are improved by forming a strong network between the modified conjugated diene polymer, the specific conjugated diene rubber, and the silica described above. Additionally, it is also thought that because the main groove area ratio of the tire 2 of an embodiment of the present invention is in a range suitable for the aforementioned strong network, the durability performance described above is sufficiently exhibited.

As a result, it is assumed that the tire 2 of an embodiment of the present invention exhibits the effects described above.

Next, the tire 2 of an embodiment of the present invention will be described while referring to the drawings. However, the tire 2 of an embodiment of the present invention is not limited thereto.

FIG. 4 is a cross-sectional view illustrating a cross-sectional shape of the pneumatic tire 2 according to an

embodiment of the present invention.

The pneumatic tire (hereinafter, also referred to as simply "tire") 10 illustrated in FIG. 4 includes the tread portion 12, the shoulder portion 14, the sidewall portion 16, and the bead portion 18 as major constituents. Herein, as indicated by arrows in FIG. 4, "tire lateral direction" refers to a direction parallel to a rotation axis (not illustrated) of the tire, and "tire radial direction" refers to a direction orthogonal to the rotation axis. "Tire circumferential direction" refers to the rotating direction with the rotation axis as the axis at the center of rotation.

Additionally, "tire inner side" refers to a tire inner surface side facing the cavity region R that applies, in the tire radial direction, a predetermined internal pressure to a lower side of the tire in FIG. 4, that is, to the tire. "Tire outer side" refers to a tire outer surface side that is visible to the user on an upper side of the tire in FIG. 4, that is, on the side opposite the tire inner circumferential surface. The reference sign CL in FIG. 4 denotes a tire equatorial plane, and the tire equatorial plane CL is a plane that is orthogonal to the rotation axis of the pneumatic tire 10 and passes through the center of the pneumatic tire in the tire lateral direction.

The tire 10 mainly includes the carcass layer 20, the belt layer 22, the belt auxiliary reinforcing layer 24, the bead core 28, the bead filler 30, the tread rubber layer 32 constituting the tread portion 12, the sidewall rubber layer 34 constituting the sidewall portion 16, the rim cushion rubber layer 36, and the inner liner rubber layer 38 provided at the tire inner circumferential surface.

The tread rubber layer 32 is formed from the composition according to an embodiment of the present invention described above. That is, the tire 10 is a tire (pneumatic tire) that uses the composition of an embodiment of the present invention described above in the tire treads.

The thickness of the tread rubber layer 32 is not particularly limited but is preferably from 6 to 10 mm because at such thickness, more superior levels of wear resistance performance, rolling performance, dry steering stability performance, wet steering stability performance, and durability performance are exhibited. Hereinafter, "more superior levels of wear resistance performance, rolling performance, dry steering stability performance, wet steering stability performance, and durability performance are exhibited" is also referred to as "a more superior effect 2 of an embodiment of the present invention is exhibited".

The tread portion 12 is provided with the land portion 12b that constitutes the tread surface 12a on the tire outer side, with the main groove 12c formed continuously in the tire circumferential direction, and with a plurality of lug grooves (not illustrated) extending in the tire lateral direction, and the land portion 12b is defined by the main groove 12c and lug grooves. A tread pattern is formed in the tread surface 12a by the main groove 12c and the land portion 12b. Here, the main groove area ratio of the main groove 12c is from 20.0 to 25.0%. The details of the main groove area ratio are described below. The tire 10 may have grooves (subsidiary grooves, sipes, etc.) other than the main groove and the lug grooves.

The pair of the left and right bead cores 28 around which the carcass layer 20 is folded and that function to fix the tire 10 to the wheel is provided in the bead portion 18. Additionally, the bead filler 30 is also provided in the bead portion 18 so as to contact the bead core 28. Therefore, the bead core 28 and the bead filler 30 are sandwiched by the body portion 20a and the folded back portion 20b of the carcass layer 20.

The carcass layer 20 extends in the tire lateral direction, from a portion corresponding to the tread portion 12 through portions corresponding to the shoulder portion 14 and the sidewall portion 16 to the bead portion 18, and forms a skeleton of the tire 10.

The carcass layer 20 has a configuration in which reinforcing cords are arranged and covered with a cord coating rubber. The carcass layer 20 is folded back at the pair of the left and right bead cores 28 from the tire inner side to the tire outer side to form the end portion 20e in a region of the sidewall portion 16 and includes a body portion 20a and a folded back portion 20b that are delimited by the bead core 28. In other words, in the present embodiment, a single layer of the carcass layer 20 is mounted between the pair of the left and right bead portions 18. The number of the carcass layers 20 is not limited to one layer, and a plurality of layers may be used depending on the structure and application. The carcass layer 20 is preferably a single layer structure (1 ply) from the perspective of weight reduction.

Additionally, the carcass layer 20 may be configured by one sheet material or a plurality of sheet materials. When configured by a plurality of sheet materials, the carcass layer 20 has a joint portion (splice portion).

Organic fiber cords of the carcass layer 20 are formed, for example, from polyethylene terephthalate (PET), polyethylene naphthalate (PEN), rayon, or nylon.

As the cord coating rubber of the carcass layer 20, preferably one or more types of rubber selected from natural rubber (NR), styrene-butadiene rubber (SBR), butadiene rubber (BR), and isoprene rubber (IR) are used. Furthermore, as these rubbers, a rubber that has been terminal modified by a functional group containing an element such as nitrogen, oxygen, fluorine, chlorine, silicon, phosphorus, or sulfur, including, for example, an amine group, an amide group, a hydroxyl group, an ester group, a ketone group, a siloxy group, or an alkylsilyl group; or a rubber that has been terminal modified by an epoxy can be used.

Examples of the carbon black compounded in these rubbers include carbon blacks having an iodine adsorption amount of from 20 to 100 (g/kg), preferably from 20 to 50 (g/kg), a dibutyl phthalate (DBP) absorption amount of from

50 to 135 ($cm^3$/100 g), preferably from 50 to 100 ($cm^3$/100 g), and a cetyltrimethylammonium bromide (CTAB) adsorption specific surface area of from 30 to 90 ($m^2$/g), preferably from 30 to 45 ($m^2$/g). Note that in the present specification, the amount of iodine adsorbed by the carbon black is measured in accordance with JIS K6217-1:2008. Also, the DBP absorption amount is measured in accordance with JIS K6217-4:2008. The CTAB adsorption specific surface area is measured in accordance with JIS K6217-3:2001.

The amount of sulfur that is used is, for example, from 1.5 to 4.0 parts by mass and preferably from 2.0 to 3.0 parts by mass per 100 parts by mass of the rubber.

Main Groove Area Ratio

As described above, in the tire 2 of an embodiment of the present invention, the main groove area ratio is from 20.0 to 25.0%.

The "main groove area ratio" is defined as: (main groove area)/(total groove area + ground contact area).

Here, the "main groove area" refers to the opening area of the main groove at the ground contact surface. For example, in the case of the tire 10 illustrated in FIG. 4, the main groove area is the total of the opening areas of the four main grooves 12c at the ground contact surface. Note that in the present specification, the main groove refers to a groove in the circumferential direction having a groove width of not less than 5 mm. The upper limit of the groove width of the main groove is not particularly limited, but from the perspective of achieving the more superior effect 2 of an embodiment of the present invention, the upper limit is preferably 30 mm or less.

In addition, the "total groove area" refers to the opening area of all of the grooves including the main groove, at the ground contact surface. Furthermore, the "ground contact area" refers to the contact area between the land portion and the ground contact surface.

Additionally, the main groove area, total groove area, and the ground contact area are measured at a contact surface between a tire and a flat plate when the tire is mounted on a specified rim, inflated to the specified internal pressure, placed vertically on the flat plate in a static state, and loaded with a load corresponding to a specified load.

Here, "specified rim" refers to an "applicable rim" defined by the Japan Automobile Tyre Manufacturers Association (JATMA), a "Design Rim" defined by the Tire and Rim Association (TRA), or a "Measuring Rim" defined by the European Tyre and Rim Technical Organisation (ETRTO). Additionally, "specified internal pressure" refers to a "maximum air pressure" defined by JATMA, a maximum value in "TIRE LOAD LIMITS AT VARIOUS COLD INFLATION PRESSURES" defined by TRA, or "INFLATION PRESSURES" defined by ETRTO. Additionally, "specified load" refers to a "maximum load capacity" defined by JATMA, a maximum value in "TIRE LOAD LIMITS AT VARIOUS COLD INFLATION PRESSURES" defined by TRA, or "LOAD CAPACITY" defined by ETRTO. However, in the case of JATMA, for a passenger vehicle tire, the specified internal pressure is an air pressure of 180 kPa, and the specified load is 88% of the maximum load capacity.

## Examples

The present invention is described in further detail below using examples. However, the present invention is not limited to these examples.

### Synthesis Example

Modified conjugated diene polymers, specific conjugated diene rubbers, and comparative conjugated diene rubbers were synthesized as described below.

### Synthesis of Modified Conjugated Diene Polymer

(1) Preparation of Catalyst

A dried, nitrogen-purged glass bottle having a rubber stopper and a volume of approximately 100 mL was charged, in the following order, with 7.11 g of a cyclohexane solution of butadiene (15.2 mass%), 0.59 mL of a cyclohexane solution (0.56 M) of neodymium neodecanoate, 10.32 mL of a toluene solution (3.23M as an aluminum concentration) of methylaluminoxane MAO (PMAO, available from Tosoh Akzo Corp.), and 7.77 mL of a hexane solution (0.90 M) of diisobutylaluminum hydride (available from Kanto Chemical Co., Ltd.), the mixture was aged for 2 minutes at room temperature, after which 1.45 mL of a hexane solution (0.95 M) of diethylaluminum chloride (available from Kanto Chemical Co., Inc.) was added, and the mixture was aged for 15 minutes at room temperature while occasionally stirred. The concentration of neodymium in the catalyst solution thus obtained was 0.011 M (mol/liter).

(2) Production of Intermediate Polymer

A dried, nitrogen-purged glass bottle having a rubber stopper and a volume of approximately 900 mL was charged with a cyclohexane solution of dried and purified 1,3-butadiene and dried cyclohexane, respectively, and 400 g of a cyclohexane solution of 12.5 mass% 1,3-butadiene was added thereto. Next, 2.28 mL (0.025 mmol in terms of neodymium) of the catalyst solution prepared in (1) above was added, and polymerization was performed for 1.0 hour in a 50°C hot water bath to produce an intermediate polymer. The microstructure of the obtained polymer had a cis-1,4-bond content of 95.5 mol%, a trans-1,4-bond content of 3.9 mol%, and a vinyl bond content of 0.6 mol%. These microstructures (cis-1,4-bond content, trans-1,4-bond content, vinyl bond content) were determined by Fourier transform infrared spectroscopy (FT-IR).

(3) Primary Modification Treatment

A primary modification was performed by inserting, as a primary modifying agent, a hexane solution (1.0 M) of 3-glycidoxypropyltrimethoxy silane (GPMOS) into the polymerization solution obtained in (2) above so that the GPMOS was 23.5 molar equivalents with respect to the neodymium and then treating the mixture at 50°C for 60 minutes.

(4) Secondary Modification Treatment

Next, 1.76 mL (70.5 eq/Nd equivalent) of a cyclohexane solution (1.01 M) of bis (2-ethylhexanoate)tin (BEHAS) as a condensation accelerator; and 32 μL (70.5 eq/Nd equivalent) of ion-exchanged water were inserted, and the mixture was treated for 1.0 hour in a 50°C hot water bath. Subsequently, the reaction was stopped by adding 2 mL of a 5% isopropanol solution of an anti-aging agent 2,2-methylene-bis(4-ethyl-6-t-butylphenol) (NS-5) to the polymerization system, furthermore, re-precipitation was performed in an isopropanol solution containing a trace amount of NS-5, and drum drying was performed to obtain a modified conjugated diene polymer. The Mooney viscosity $ML_{1+4}$ (100°C) of the obtained modified conjugated diene polymer was measured at 100°C using an RLM-01 type tester (available from Toyo Seiki Seisaku-sho, Ltd.) and was found to be 93. The microstructure after modification was also the same as the microstructure of the intermediate polymer.

Synthesis of Specific Conjugated Diene Rubber

Cyclohexane (35 g) and tetramethylethylenediamine (1.4 mmol) were added into a dried, nitrogen-purged 100 mL ampoule bottle, and then n-butyllithium (4.3 mmol) was further added. Isoprene (21.6 g) and styrene (3.1 g) were then slowly added and reacted inside the ampoule bottle at 50°C for 120 minutes to obtain a polymer block A with an active terminal. The weight average molecular weight, molecular weight distribution, aromatic vinyl unit content, isoprene unit content, and 1,4-bond content were measured for this polymer block A. The measurement results are shown below in Table 1.

Next, cyclohexane (4000 g), 1,3-butadiene (474.0 g), and styrene (126.0 g) were loaded in a nitrogen atmosphere in an autoclave equipped with a stirrer, then the total amount of the obtained polymer block A having an active terminal as described above was added, and polymerization of the mixture was initiated at 50°C. After the polymer conversion rate was confirmed to be within a range of from 95% to 100%, a polyorganosiloxane A represented by the following Formula (4) was added in a state of a xylene solution having a 20 mass% concentration such that the content of epoxy groups became 1.42 mmol (equivalent to 0.33 times the number of moles of the n-butyllithium that was used), and the mixture was reacted for 30 minutes. Subsequently, methanol of an amount equivalent to twice the number of moles of n-butyllithium that was used was added as a polymerization terminator, and a solution containing a specific conjugated diene rubber was obtained. A small amount of an anti-aging agent (IRGANOX 1520, available from BASF) was added to the solution thereof, and then 25 parts by mass of Fukko Luella Ceramic 30 (available from Nippon Oil Corporation) was added as an extender oil per 100 parts by mass of the specific conjugated diene rubber, after which the solid rubber was recovered using a steam stripping process. The obtained solid rubber was dehydrated using a roll and dried in a dryer to obtain a solid specific conjugated diene rubber.

[Chemical 1]

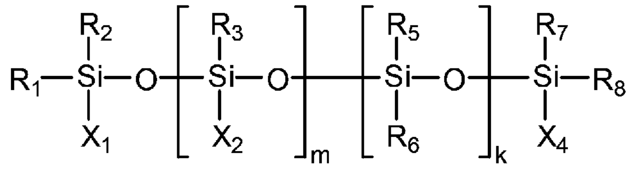

Formula (4)

In Formula (4) above, each of $X_1$, $X_4$, $R_1$ to $R_3$, and Rs to Rs is a methyl group. In Formula (4) above, m is 80, and k is 120. In Formula (4) above, $X_2$ is a group expressed by Formula (5) below (in Formula (5), * indicates a bond position).

[Chemical 2]

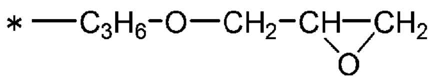

Formula (5)

The weight average molecular weight, molecular weight distribution, coupling ratio of three or more branches, aromatic vinyl unit content, vinyl bond content, and Mooney viscosity were measured for the obtained specific conjugated diene rubber. The measurement results are shown in Table 2. The measurement method was as follows.

Weight Average Molecular Weight, Molecular Weight Distribution, and Coupling Ratio of Three or More Branches

The weight average molecular weight, molecular weight distribution, and coupling ratio of three or more branches (proportion (mass%) of the "structure in which three or more conjugated diene polymer chains are bonded" relative to the specific conjugated diene rubber) were determined using a chart obtained by gel permeation chromatography based on molecular weight in terms of polystyrene. The specific measurement conditions for the gel permeation chromatography were as follows.

- Measurement instrument: HLC-8020 (available from Tosoh Corp.)
- Column: Two GMH-HR-H (available from Tosoh Corp.) connected in series.
- Detector: Differential refractometer RI-8020 (available from Tosoh Corp.)
- Eluent: Tetrahydrofuran
- Column temperature: 40°C

Here, the coupling ratio of three or more branches is a ratio (s2/s1) of an area (s2) of a peak portion having a peak top molecular weight that is 2.8 times or more the peak top molecular weight indicated by the peak of smallest molecular weight to a total elution area (s1).

Aromatic Vinyl Unit Content and Vinyl Bond Content The aromatic vinyl unit content and vinyl bond content were measured by $^1$H-NMR.

Mooney Viscosity

The Mooney viscosity ($ML_{1+4}$, 100°C) was measured in accordance with JIS K6300-1:2013.

[Table 1]

| Table 1 | Polymer Block A |
|---|---|
| Weight average molecular weight | 8700 |
| Molecular weight distribution (Mw/Mn) | 1.10 |
| Aromatic vinyl unit content (mass%) | 12.6 |
| Isoprene unit content (mass%) | 87.4 |
| 1,4-bonding content (mass%) | 58.0 |

[Table 2]

| Table 2 | Specific Conjugated Diene Rubber |
|---|---|
| Weight average molecular weight | 640000 |
| Molecular weight distribution (Mw/Mn) | 1.65 |
| Coupling ratio of three or more branches (wt.%) | 12.5 |
| Aromatic vinyl unit content (mass%) | 42.6 |
| Vinyl bond content (wt%) | 29.5 |
| Mooney viscosity ($ML_{1+4}$, 100°C) | 58 |

Synthesis of Comparative Conjugated Diene Rubber Amounts of 4533 g of cyclohexane, 338.9 g (3.254 mol) of styrene, 468.0 g (8.652 mol) of butadiene, 20.0 g (0.294 mol) of isoprene, and 0.189 mL (1.271 mmol) of N,N,N',N'-tetramethylethylenediamine were added to a nitrogen-purged autoclave reaction vessel having an internal capacity of 10 L, and then stirring was initiated. After the temperature of the contents in the reaction vessel was adjusted to 50°C, 5.061 mL (7.945 mmol) of n-butyllithium was added. After the polymerization conversion rate reached approximately 100%, an additional 12.0 g of isoprene was added and the mixture was reacted for five minutes. Next, 0.281 g (0.318 mmol) of a toluene solution containing 40 wt.% of 1,6-bis(trichlorosilyl)hexane was added and the mixture was reacted for 30 minutes. Furthermore, the polyorganosiloxane A represented by Formula (4) above was added in a state of a xylene solution having a 20 mass% concentration such that the content of epoxy groups became 1.00 mmol (equivalent to 0.13 times the number of moles of the n-butyllithium that was used), and the mixture was reacted for 30 minutes. Next, 0.5 mL of methanol was added, the mixture was stirred for 30 minutes, and a solution containing conjugated diene rubber was obtained. A small amount of an anti-aging agent (IRGANOX 1520, available from BASF) was added to the obtained solution, and 25 parts by mass of Fukko Luella Ceramic 30 (available from Nippon Oil Corporation) was added as an extender oil per 100 parts by mass of the conjugated diene rubber, after which the solid rubber was recovered using a steam stripping process. The obtained solid rubber was dehydrated using a roll and dried in a dryer to obtain a solid conjugated diene rubber. The obtained conjugated diene rubber was used as a comparative conjugated diene rubber.

Preparation of Tire Tread Rubber Composition

The components listed in the following Table 3 were blended at the proportions (parts by mass) listed in the table.
Specifically, a master batch was obtained by first heating, to a temperature near 150°C, the components listed in Table 3 below, excluding the sulfur and the vulcanization accelerator, in a 1.7 L closed-type Banbury mixer, followed by mixing for 5 minutes, and then discharging the mixture and cooling it to room temperature. The sulfur and a vulcanization accelerator were then mixed into the resulting master batch using the Banbury mixer described above, and a tire tread rubber composition was obtained.
Note that in Table 3, the values of the comparative conjugated diene rubber and the specific conjugated diene rubber are the net amounts of the rubbers (the amount excluding the extender oil).

Evaluation

The following evaluations were performed using the obtained tire tread rubber compositions.

Processability

The scorch times of the obtained tire tread rubber compositions (unvulcanized) were measured at a test temperature of 125°C in accordance with JIS K6300-1:2013 using an L-shaped rotor.
The results (scorch times) are listed in Table 3. The results are expressed as index values with the scorch time of Reference Example 1 being assigned an index value of 100. Larger indexes indicate longer scorch times and more excellent processability. In terms of practical applications, an index value of 105 or greater is preferable.

tan $\delta$ (0°C)

A vulcanized rubber sheet was prepared by press-vulcanizing the obtained (unvulcanized) tire tread rubber

composition for 20 minutes at 160°C in a mold (15 cm × 15 cm × 0.2 cm).

The value of tan δ (0°C) of the manufactured vulcanized rubber sheet was measured with an elongation deformation strain of 10% ± 2%, a vibration frequency of 20 Hz, and a temperature of 0°C using a viscoelasticity spectrometer (available from Toyo Seiki Seisaku-sho, Ltd.) in accordance with JIS K6394:2007.

The results (tan δ (0°C)) are listed in Table 3 (row of "tan δ 0°C (wet grip performance)" in Table 3). The results are expressed as index values with the value of tan δ (0°C) of Reference Example 1 being assigned the index value of 100. Larger index values indicate larger tan δ (0°C) values and more excellent wet grip performance of a formed tire. In terms of practical applications, an index value of 100 or greater is preferable.

(tan δ (60°C))

The value of tan δ (60°C) was measured according to the same procedure as that of tan δ (0°C) described above with the exception that the measurement was carried out at a temperature of 60°C instead of measuring at a temperature of 0°C.

The results (the reciprocal of tan δ (60°C)) are listed in Table 3 (row of "tan δ 60°C (rolling characteristics)" in Table 3). The results are expressed as index values with the reciprocal of tan δ (60°C) of Reference Example 1 being assigned the index value of 100. Larger index values indicate smaller tan δ (60°C) values and more excellent rolling characteristics of a formed tire. In terms of practical applications, an index value of 104 or greater is preferable.

Wear Resistance Performance (Low Severity)

Vulcanized rubber sheets were manufactured as described above using the obtained (unvulcanized) tire tread rubber composition.

The amount of wear of each of the manufactured vulcanized rubber sheets was measured in accordance with JIS K6264-1, 2:2005 using a Lambourn abrasion tester (available from Iwamoto Seisakusho Co. Ltd.) at a temperature of 20°C and a slip ratio of 25%.

The results are shown in Table 3 (row of "Wear resistance performance (low severity)" in Table 3). The results are expressed as index values calculated from the following equation. Larger index values indicate smaller amounts of wear and more excellent wear resistance performance (low severity) of a formed tire. In terms of practical applications, an index value of 98 or greater is preferable.

$$\text{Index value} = [(\text{Amount of Wear of Reference Example 1})/(\text{Amount of Wear in Each Example})] \times 100$$

Wear Resistance Performance (High Severity)

The amount of wear was measured in accordance with the same procedure as that used to measure the wear resistance performance (low severity) described above with the exception that the measurements were performed with a slip ratio of 50% instead of a slip ratio of 25%.

The results are shown in Table 3 (row of "Wear resistance performance (high severity)" in Table 3). The results are expressed as index values calculated from the following equation. Larger index values indicate smaller amounts of wear and more excellent wear resistance performance (high severity) of a formed tire. In terms of practical applications, an index value of 100 or greater is preferable.

$$\text{Index value} = [(\text{Amount of Wear of Reference Example 1})/(\text{Amount of Wear in Each Example})] \times 100$$

Oxidation Degradation Resistance

Vulcanized rubber sheets were manufactured as described above using the obtained (unvulcanized) tire tread rubber composition.

A JIS No. 3 dumbbell-shaped test piece (thickness of 2 mm) was punched from each of the manufactured vulcanized rubber sheets in accordance with JIS K6251:2010, and the strength at breakage and the elongation at breakage were evaluated at a temperature of 20°C and a tensile test speed of 500 mm/minutes. The toughness parameter (before heating) was then determined from the following equation.

$$\text{Toughness Parameter} = \text{Strength at Breakage} \times \text{Elongation at Breakage}$$

Next, the vulcanized rubber sheet manufactured as described above was heated (80°C, 100 hours) in air. Subsequently, the strength at breakage and the elongation at breakage were evaluated as described above, and the toughness parameter (after heating) was determined. The maintenance rate was then determined from the following equation.

$$\text{Maintenance Rate} = (\text{Toughness Parameter After Heating})/(\text{Toughness Parameter Before Heating}) \times 100\ (\%)$$

The results are shown in Table 3. The results are expressed as index values with Reference Example 1 being assigned the index value of 100. Larger index values indicate more superior oxidation degradation resistance.

[Table 3]

| Table 3 | Reference Example 1 | Comparative Example 1 | Comparative Example 2 | Comparative Example 3 | Comparative Example 4 | Comparative Example 5 | Example 1 | Example 2 | Example 3 | Example 4 | Example 5 | Example 6 |
|---|---|---|---|---|---|---|---|---|---|---|---|---|
| Specific conjugated diene rubber | | 80.00 | | 80.00 | 80.00 | 80.00 | 80.00 | 50.00 | 90.00 | 80.00 | 80.00 | 80.00 |
| Comparative conjugated diene rubber | 80.00 | | 80.00 | | | | | | | | | |
| Modified conjugated diene polymer | | | 20.00 | 20.00 | 20.00 | 20.00 | 20.00 | 50.00 | 10.00 | 20.00 | 20.00 | 20.00 |
| Comparative conjugated diene polymer | 20.00 | 20.00 | | | | | | | | | | |
| Silica 1 (large particle size) | 100.00 | 100.00 | 100.00 | 40.00 | 160.00 | 100.00 | 100.00 | 100.00 | 100.00 | 100.00 | | |
| Silica 2 (small particle size) | | | | | | | | | | | 100.00 | 100.00 |
| Carbon black | 5.00 | 5.00 | 5.00 | 5.00 | 5.00 | 5.00 | 5.00 | 5.00 | 5.00 | 5.00 | 5.00 | 5.00 |
| Silane coupling agent 1 | 10.00 | 10.00 | 10.00 | 10.00 | 10.00 | 10.00 | 10.00 | 10.00 | 10.00 | | | 10.00 |
| Silane coupling agent 2 | | | | | | | | | | 10.00 | 10.00 | |
| Aroma oil | 30.00 | 20.00 | 20.00 | 0.00 | 45.00 | 30.00 | 20.00 | 20.00 | 20.00 | 10.00 | 20.00 | 20.00 |
| Zinc oxide | 3.00 | 3.00 | 3.00 | 3.00 | 3.00 | 3.00 | 3.00 | 3.00 | 3.00 | 3.00 | 3.00 | 3.00 |
| Sulfur | 1.00 | 1.00 | 1.00 | 1.00 | 1.00 | 1.00 | 1.00 | 1.00 | 1.00 | 1.00 | 1.00 | 1.00 |
| Vulcanization accelerator | 2.00 | 2.00 | 2.00 | 2.00 | 2.00 | 2.00 | 2.00 | 2.00 | 2.00 | 2.00 | 2.00 | 2.00 |
| Aromatic modified terpene resin | 10.00 | 10.00 | 10.00 | 10.00 | 10.00 | | 10.00 | 10.00 | 10.00 | 10.00 | 10.00 | 10.00 |

(continued)

| Table 3 | Reference Example 1 | Comparative Example 1 | Comparative Example 2 | Comparative Example 3 | Comparative Example 4 | Comparative Example 5 | Example 1 | Example 2 | Example 3 | Example 4 | Example 5 | Example 6 |
|---|---|---|---|---|---|---|---|---|---|---|---|---|
| Processability | 100 | 113 | 108 | 120 | 90 | 110 | 110 | 115 | 108 | 130 | 120 | 110 |
| Tan δ 0°C (wet grip performance) | 100 | 103 | 102 | 85 | 115 | 95 | 105 | 100 | 104 | 110 | 115 | 107 |
| tan δ 60°C (rolling characteristics) | 100 | 99 | 103 | 130 | 90 | 106 | 105 | 108 | 104 | 108 | 104 | 105 |
| Wear resistance performance (low severity) | 100 | 102 | 99 | 95 | 103 | 105 | 102 | 112 | 100 | 102 | 104 | 103 |
| Wear resistance performance (high severity) | 100 | 102 | 101 | 95 | 104 | 105 | 102 | 112 | 102 | 104 | 110 | 105 |
| Oxidation degradation resistance | 100 | 101 | 101 | 97 | 104 | 105 | 110 | 108 | 109 | 112 | 114 | 112 |

Details of the components listed in Table 3 are as follows. Note that the specific conjugated diene rubber corresponds to the specific conjugated diene rubber described above, and the comparative conjugated diene rubber does not correspond to the specific conjugated diene rubber described above. Furthermore, the modified conjugated diene polymer corresponds to the modified conjugated diene polymer described above, and the comparative modified conjugated diene polymer does not correspond to the modified conjugated diene polymer described above.

- Specific conjugated diene rubber: Specified conjugated diene rubber synthesized as described above (containing 25 parts by mass of extender oil per 100 parts by mass of rubber)
- Comparative conjugated diene rubber: Comparative conjugated diene rubber synthesized as described above (containing 25 parts by mass of extender oil per 100 parts by mass of rubber) (aromatic vinyl unit content: 42 mass%, vinyl bond content: 32 mass%, Tg: -25°C, Mw: 750000)
- Modified conjugated diene polymer: Modified conjugated diene polymer synthesized as described above
- Comparative conjugated diene polymer: Nipol BR 1220 (not-modified BR, available from Zeon Corporation)
- Silica 1 (large particle size): Zeosil 1165MP (CTAB adsorption specific surface area: 159 $m^2/g$; available from Solvay)
- Silica 2 (small particle size): Ultrasil 9000 GR (CTAB adsorption specific surface area: 197 $m^2/g$; available from Evonik Industries AG)
- Carbon black: Show Black N339 (available from Cabot Japan K.K.)
- Silane coupling agent 1: Si69 (bis(3-triethoxysilylpropyl) tetrasulfide; available from Evonik Degussa Corporation)
- Silane coupling agent 2: Silane coupling agent represented by General Formula (S) described above (where n = 2, m = 3, and k = 7 in General Formula (S) described above)
- Aroma oil: Extract No. 4S (available from Showa Shell Sekiyu K.K.)
- Zinc oxide: Zinc oxide III (available from Seido Chemical Industry Co., Ltd.)
- Sulfur: Golden Flower oil-treated sulfur powder (sulfur content: 95.24 mass%; available from Tsurumi Chemical Industry Co., Ltd.)
- Vulcanization accelerator: SANTOCURE CBS (available from FLEXSYS)
- Aromatic modified terpene resin: YS Resin TO-125 (softening point: 125±5°C; available from Yasuhara Chemical Co., Ltd.)

As can be understood from Table 3, Examples 1 to 6, in which the modified conjugated diene polymer and the specific conjugated diene rubber were used in combination, exhibited excellent processability, wet grip performance, rolling characteristics, wear resistance performance, and oxidation degradation resistance.

In comparison of Examples 1 to 3, Example 2, in which the proportion of the content of the modified conjugated diene polymer with respect to the content of the specific conjugated diene rubber was 30 mass% or greater, exhibited more superior processability, rolling resistance, and wear resistance.

In comparison of Examples 1 and 4, Example 4, in which the silane coupling agent was represented by General Formula (S) described above, exhibited more superior processability, wet grip performance, rolling characteristics, wear resistance performance, and oxidation degradation resistance. Similarly, in comparison of Examples 5 and 6, Example 5, in which the silane coupling agent was represented by General Formula (S) described above, exhibited more superior processability, wet grip performance, wear resistance performance, and oxidation degradation resistance.

In comparison of Examples 4 and 5, Example 5, in which the CTAB adsorption specific surface area of the silica was from 160 to 300 $m^2/g$, exhibited more superior wet grip performance, wear resistance performance, and oxidation degradation resistance.

On the other hand, Reference Example 1 in which the modified conjugated diene polymer and the specific conjugated diene rubber were not used in combination; Comparative Examples 1 and 2; Comparative Example 3 in which the modified conjugated diene polymer and the specific conjugated diene rubber were used in combination, but the content of the silica was less than 50 parts by mass per 100 parts by mass of the diene rubber; Comparative Example 4 in which the modified conjugated diene polymer and the specific conjugated diene rubber were used in combination, but the content of the silica exceeded 150 parts by mass per 100 parts by mass of the diene rubber; and Comparative Example 5, which used the modified conjugated diene polymer and the specific conjugated diene rubber in combination but did not contain the specific aromatic modified terpene resin, exhibited insufficiencies in terms of at least one of processability, wet grip performance, rolling characteristics, wear resistance performance, or oxidation degradation resistance.

Manufacturing a Pneumatic Tire (Part 1)

The components listed in Table 4 below were blended at the proportions (parts by mass) listed in Table 4.

Specifically, a master batch was obtained by first heating, to a temperature near 150°C, the components listed in Table 4 below, excluding the sulfur and the vulcanization accelerator, in a 1.7 L closed-type Banbury mixer, followed

by mixing for 5 minutes, and then discharging the mixture and cooling it to room temperature. The sulfur and a vulcanization accelerator were then mixed into the resulting master batch using the Banbury mixer described above, and a tire tread rubber composition was obtained. The tire tread rubber composition of Reference Example 1A is the same as the tire tread rubber composition of Reference Example 1 in Table 3 above, and the tire tread rubber compositions of Comparative Examples 1A to 5A are respectively the same as the tire tread rubber compositions of Comparative Examples 1 to 5 in Table 3 above. Furthermore, the tire tread rubber compositions of Examples 1A to 5A are the same as the tire tread rubber compositions of Examples 1 to 5 in Table 3 above, and the tire tread rubber compositions of Examples 6A and 7A are the same as the tire tread rubber composition of Example 1 in Table 3 above.

Note that in Table 4, the values of the comparative conjugated diene rubber and the specific conjugated diene rubber are the net amounts of the rubbers (the amount excluding the extender oil). Furthermore, the parts by mass of the aroma oils of each of the examples and comparative examples differed. This was done in order to match the hardness levels.

A pneumatic tire illustrated in FIG. 2 was manufactured using the obtained tire tread rubber composition in the tire tread. At this time, a tread pattern was formed so that the average main groove depth described above became the value listed in Table 4.

Note that since Examples 1A to 5A are pneumatic tires in which a composition according to an embodiment of the present invention described above is used in a tire tread, Examples 1A to 5A correspond to a tire according to an embodiment of the present invention described above, and because the average main groove depth is within a range of from 5.0 to 7.0 mm, Examples 1A to 5A also correspond to the tire 1 according to an embodiment of the present invention described above. On the other hand, Examples 6A and 7A are pneumatic tires in which a composition according to an embodiment of the present invention described above is used in a tire tread, and therefore Examples 6A and 7A correspond to a tire according to an embodiment of the present invention described above, but because the average main groove depth is outside of the range of from 5.0 to 7.0 mm, Examples 6A and 7A do not correspond to the tire 1 according to an embodiment of the present invention described above.

## Evaluation

The obtained pneumatic tires were evaluated as follows.

### Wear Resistance Performance

The obtained pneumatic tires were mounted on a test vehicle with an engine displacement of 2.5 liters, and the amount of wear after traveling 20000 km on public roads was measured.

The results (reciprocal of wear amount) are shown in Table 4. The results are expressed as index values with the reciprocal of the wear amount of Reference Example 1A being assigned the index value of 100. Larger index values indicate more superior wear resistance performance. In terms of practical applications, an index value of 97 or greater is preferable.

### Rolling Performance

Rolling resistance values of the obtained pneumatic tires were measured between speeds of 40 km/hour and 150 km/hour using a drum testing machine. The sum total was then determined.

The results (reciprocal of the sum total of the rolling resistance values) are shown in Table 4. The results are expressed as index values with the reciprocal of the sum total of the rolling resistance value of Reference Example 1A being assigned the index value of 100. Larger index values indicate smaller rolling resistance and more superior rolling performance. In terms of practical applications, an index value of 100 or greater is preferable.

### Noise Performance

The noise levels of the tire lateral sound of the obtained pneumatic tires were measured using a drum testing machine under conditions specified by the tire noise test method based on the JASO C606 standard of the Japanese Automotive Standards Organization (JASO).

The results (reciprocal of noise level) are shown in Table 4. The results are expressed as index values with the reciprocal of the noise level of Reference Example 1A being assigned the index value of 100. Larger index values indicate lower noise and better noise performance. In terms of practical applications, an index value of 100 or greater is preferable.

Dry Steering Stability Performance

The obtained pneumatic tires were mounted on a test vehicle with an engine displacement of 2.0 L, and a sensory evaluation of the steering stability performance on dry road surfaces (dry steering stability performance) was performed by a test driver.

The results are shown in Table 4. The results are expressed as index values with Reference Example 1A being assigned the index value of 2.0. Larger index values indicate more superior dry steering stability performance. In terms of practical applications, an index value of 3.0 or greater is preferable.

Wet Steering Stability Performance

The obtained pneumatic tires were mounted on a test vehicle with an engine displacement of 2.0 L, and a sensory evaluation of the steering stability performance on wet road surfaces (wet steering stability performance) was performed by a test driver.

The results are shown in Table 4. The results are expressed as index values with Reference Example 1A being assigned the index value of 2.0. Larger index values indicate more superior wet steering stability performance. In terms of practical applications, an index value of 2.5 or greater is preferable.

Durability Performance

The obtained pneumatic tires were rotated at high speed using a drum testing machine, and the distance traveled until breaking apart was measured.

The results are shown in Table 4. The results are expressed as index values with Reference Example 1A being assigned the index value of 100. Larger index values indicate more superior durability. In terms of practical applications, an index value of 108 or greater is preferable.

[Table 4]

| Table 4 | Reference Example 1A | Comparative Example 1A | Comparative Example 2A | Comparative Example 3A | Comparative Example 4A | Comparative Example 5A | Example 1A | Example 2A | Example 3A | Example 4A | Example 5A | Example 6A | Example 7A |
|---|---|---|---|---|---|---|---|---|---|---|---|---|---|
| Specific conjugated diene rubber | | 80.00 | | 80.00 | 80.00 | 80.00 | 80.00 | 50.00 | 90.00 | 80.00 | 80.00 | 80.00 | 80.00 |
| Comparative conjugated diene rubber | 80.00 | | 80.00 | | | | | | | | | | |
| Modified conjugated diene polymer | | | 20.00 | 20.00 | 20.00 | 20.00 | 20.00 | 50.00 | 10.00 | 20.00 | 20.00 | 20.00 | 20.00 |
| Comparative conjugated diene polymer | 20.00 | 20.00 | | | | | | | | | | | |
| Silica 1 (large particle size) | 100.00 | 100.00 | 100.00 | 40.00 | 160.00 | 100.00 | 100.00 | 100.00 | 100.00 | 100.00 | | 100.00 | 100.00 |
| Silica 2 (small particle size) | | | | | | | | | | | 100.00 | | |
| Carbon black | 5.00 | 5.00 | 5.00 | 5.00 | 5.00 | 5.00 | 5.00 | 5.00 | 5.00 | 5.00 | 5.00 | 5.00 | 5.00 |
| Silane coupling agent 1 | 10.00 | 10.00 | 10.00 | 10.00 | 10.00 | 10.00 | 10.00 | 10.00 | 10.00 | | | 10.00 | 10.00 |
| Silane coupling agent 2 | | | | | | | | | | 10.00 | 10.00 | | |
| Aroma oil | 30.00 | 20.00 | 20.00 | 0.00 | 45.00 | 30.00 | 20.00 | 20.00 | 20.00 | 10.00 | 20.00 | 20.00 | 20.00 |
| Zinc oxide | 3.00 | 3.00 | 3.00 | 3.00 | 3.00 | 3.00 | 3.00 | 3.00 | 3.00 | 3.00 | 3.00 | 3.00 | 3.00 |
| Sulfur | 1.00 | 1.00 | 1.00 | 1.00 | 1.00 | 1.00 | 1.00 | 1.00 | 1.00 | 1.00 | 1.00 | 1.00 | 1.00 |
| Vulcanization accelerator | 2.00 | 2.00 | 2.00 | 2.00 | 2.00 | 2.00 | 2.00 | 2.00 | 2.00 | 2.00 | 2.00 | 2.00 | 2.00 |

(continued)

| Table 4 | Reference Example 1A | Comparative Example 1A | Comparative Example 2A | Comparative Example 3A | Comparative Example 4A | Comparative Example 5A | Example 1A | Example 2A | Example 3A | Example 4A | Example 5A | Example 6A | Example 7A |
|---|---|---|---|---|---|---|---|---|---|---|---|---|---|
| Aromatic modified terpene resin | 10.00 | 10.00 | 10.00 | 10.00 | 10.00 | | 10.00 | 10.00 | 10.00 | 10.00 | 10.00 | 10.00 | 10.00 |
| Average main groove depth (mm) | 6.0 | 6.0 | 6.0 | 6.0 | 6.0 | 6.0 | 6.0 | 6.0 | 6.0 | 6.0 | 6.0 | 8.0 | 4.0 |
| Wear resistance performance | 100 | 102 | 99 | 95 | 103 | 105 | 102 | 112 | 100 | 102 | 104 | 104 | 98 |
| Rolling performance | 100 | 99 | 103 | 130 | 90 | 106 | 105 | 108 | 104 | 108 | 104 | 101 | 115 |
| Noise performance | 100 | 100 | 100 | 100 | 100 | 100 | 100 | 100 | 100 | 100 | 100 | 95 | 105 |
| Dry Steering Stability Performance | 2.0 | 2.0 | 2.0 | 3.0 | 3.0 | 3.0 | 3.0 | 3.0 | 3.0 | 3.5 | 4.0 | 2.5 | 3.5 |
| Wet steering stability performance | 2.0 | 2.0 | 2.0 | 3.0 | 3.0 | 3.0 | 3.0 | 3.0 | 3.0 | 4.0 | 4.5 | 3.0 | 2.5 |
| Durability performance | 100 | 101 | 101 | 105 | 103 | 105 | 110 | 108 | 109 | 112 | 115 | 101 | 102 |

The details of the components in Table 4 are the same as those in Table 3.

As can be understood from Table 4, Examples 1A to 5A, in which the modified conjugated diene polymer and the specific conjugated diene rubber were used in combination and in which the average main groove depth was within a specific range, exhibited excellent wear resistance performance, rolling performance, noise performance, dry steering stability performance, wet steering stability performance, and durability performance.

In comparison of Examples 1A to 3A, Example 2A, in which the content of the modified conjugated diene polymer in the diene rubber was 30 mass% or greater and in which the content of the specific conjugated diene rubber in the diene rubber was 70 mass% or less, exhibited more superior wear resistance performance and rolling performance.

Furthermore, in comparison of Examples 1A, 4A, and 5A, Examples 4A and 5A, in which the silane coupling agent was represented by General Formula (S) described above, exhibited more superior dry steering stability performance, wet steering stability performance, and durability performance. Among these, Example 5A, in which the CTAB adsorption specific surface area of silica was from 160 to 300 $m^2/g$, exhibited more superior dry steering stability performance, wet steering stability performance, and durability performance.

On the other hand, Reference Example 1A and Comparative Examples 1A and 2A, which did not contain at least one of the modified conjugated diene polymer or the specific conjugated diene rubber; Comparative Example 3A, in which the modified conjugated diene polymer and the specific conjugated diene rubber were used in combination, but the content of the silica was less than 50 parts by mass per 100 parts by mass of the diene rubber; Comparative Example 4A, in which the modified conjugated diene polymer and the specific conjugated diene rubber were used in combination, but the content of the silica exceeded 150 parts by mass per 100 parts by mass of the diene rubber; Comparative Example 5A, which used the modified conjugated diene polymer and the specific conjugated diene rubber in combination but did not contain a specific aromatic modified terpene resin; Example 6A, in which the average main groove depth exceeded 7.0 mm; and Example 7A, in which the average main groove depth was less than 5.0 mm, exhibited insufficiencies in terms of at least one of noise performance, dry steering stability performance, or durability performance.

In comparison of Examples 1A and 6A, Example 1A, in which the average main groove depth was 7.0 mm or less, exhibited more superior rolling performance, noise performance, dry steering stability performance, and durability performance.

Furthermore, in comparison of Examples 1A and 7A, Example 1A, in which the average main groove depth was 5.0 mm or greater, exhibited more superior wear resistance performance, wet steering stability performance, and durability performance.

Manufacturing a Pneumatic Tire (Part 2)

The components listed in Table 5 below were blended at the proportions (parts by mass) listed in Table 5.

Specifically, a master batch was obtained by first heating, to a temperature near 150°C, the components listed in Table 5 below, excluding the sulfur and the vulcanization accelerator, in a 1.7 L closed-type Banbury mixer, followed by mixing for 5 minutes, and then discharging the mixture and cooling it to room temperature. The sulfur and a vulcanization accelerator were then mixed into the resulting master batch using the Banbury mixer described above, and a tire tread rubber composition was obtained. The tire tread rubber composition of Reference Example 1B is the same as the tire tread rubber composition of Reference Example 1 in Table 3 above, and the tire tread rubber compositions of Comparative Examples 1B to 5B are respectively the same as the tire tread rubber compositions of Comparative Examples 1 to 5 in Table 3 above. Furthermore, the tire tread rubber compositions of Examples 1B to 5B are the same as the tire tread rubber compositions of Examples 1 to 5 in Table 3 above, and the tire tread rubber compositions of Examples 6B and 7B are the same as the tire tread rubber composition of Example 1 in Table 3 above.

Note that in Table 5, the values of the comparative conjugated diene rubber and the specific conjugated diene rubber are the net amounts of the rubbers (the amount excluding the extender oil). Furthermore, the parts by mass of the aroma oils of each of the examples and comparative examples differed. This was done in order to match the hardness levels.

A pneumatic tire illustrated in FIG. 4 was manufactured using the obtained tire tread rubber composition in the tire tread. At this time, a tread pattern was formed so that the main groove area ratio described above became the value listed in Table 5.

Note that since Examples 1B to 5B are pneumatic tires in which a composition according to an embodiment of the present invention described above is used in a tire tread, Examples 1B to 5B correspond to a tire according to an embodiment of the present invention described above, and because the main groove area ratio is within a range of from 20.0 to 25.0%, Examples 1B to 5B also correspond to the tire 2 according to an embodiment of the present invention described above. On the other hand, Examples 6B and 7B are pneumatic tires in which a composition according to an embodiment of the present invention described above is used in a tire tread, and therefore Examples 6B and 7B correspond to a tire according to an embodiment of the present invention described above, but because the main groove

area ratio is outside of the range of from 20.0 to 25.0%, Examples 6B and 7B do not correspond to the tire 2 according to an embodiment of the present invention described above.

Evaluation

The obtained pneumatic tires were evaluated as follows.

Wear Resistance Performance

The obtained pneumatic tires were mounted on a test vehicle with an engine displacement of 2.5 liters, and the amount of wear after traveling 20000 km on public roads was measured.
The results (reciprocal of wear amount) are shown in Table 5. The results are expressed as index values with the reciprocal of the wear amount of Reference Example 1B being assigned the index value of 100. Larger index values indicate more superior wear resistance performance. In terms of practical applications, an index value of 97 or greater is preferable.

Rolling Performance

Rolling resistance values of the obtained pneumatic tires were measured between speeds of 40 km/hour and 150 km/hour using a drum testing machine. The sum total was then determined.
The results (reciprocal of the sum total of the rolling resistance values) are shown in Table 5. The results are expressed as index values with the reciprocal of the sum total of the rolling resistance value of Reference Example 1B being assigned the index value of 100. Larger index values indicate smaller rolling resistance and more superior rolling performance. In terms of practical applications, an index value of 100 or greater is preferable.

Dry Steering Stability Performance

The obtained pneumatic tires were mounted on a test vehicle with an engine displacement of 2.0 L, and a sensory evaluation of the steering stability performance on dry road surfaces (dry steering stability performance) was performed by a test driver.
The results are shown in Table 5. The results are expressed as index values with Reference Example 1B being assigned the index value of 2.0. Larger index values indicate more superior dry steering stability performance. In terms of practical applications, an index value of 3.0 or greater is preferable.

Wet Steering Stability Performance

The obtained pneumatic tires were mounted on a test vehicle with an engine displacement of 2.0 L, and a sensory evaluation of the steering stability performance on wet road surfaces (wet steering stability performance) was performed by a test driver.
The results are shown in Table 5. The results are expressed as index values with Reference Example 1B being assigned the index value of 2.0. Larger index values indicate more superior wet steering stability performance. In terms of practical applications, an index value of 2.5 or greater is preferable.

Durability Performance

The obtained pneumatic tires were rotated at high speed using a drum testing machine, and the distance traveled until breaking apart was measured.
The results are shown in Table 5. The results are expressed as index values with Reference Example 1B being assigned the index value of 100. Larger index values indicate more superior durability performance. In terms of practical applications, an index value of 108 or greater is preferable.

[Table 5]

| Table 5 | Reference Example 1B | Comparative Example 1B | Comparative Example 2B | Comparative Example 3B | Comparative Example 4B | Comparative Example 5B | Example 1B | Example 2B | Example 3B | Example 4B | Example 5B | Example 6B | Example 7B |
|---|---|---|---|---|---|---|---|---|---|---|---|---|---|
| Specific conjugated diene rubber | | 80.00 | | 80.00 | 80.00 | 80.00 | 80.00 | 50.00 | 90.00 | 80.00 | 80.00 | 80.00 | 80.00 |
| Comparative conjugated diene rubber | 80.00 | | 80.00 | | | | | | | | | | |
| Modified conjugated diene polymer | | | 20.00 | 20.00 | 20.00 | 20.00 | 20.00 | 50.00 | 10.00 | 20.00 | 20.00 | 20.00 | 20.00 |
| Comparative conjugated diene polymer | 20.00 | 20.00 | | | | | | | | | | | |
| Silica 1 (large particle size) | 100.00 | 100.00 | 100.00 | 40.00 | 160.00 | 100.00 | 100.00 | 100.00 | 100.00 | 100.00 | | 100.00 | 100.00 |
| Silica 2 (small particle size) | | | | | | | | | | | 100.00 | | |
| Carbon black | 5.00 | 5.00 | 5.00 | 5.00 | 5.00 | 5.00 | 5.00 | 5.00 | 5.00 | 5.00 | 5.00 | 5.00 | 5.00 |
| Silane coupling agent 1 | 10.00 | 10.00 | 10.00 | 10.00 | 10.00 | 10.00 | 10.00 | 10.00 | 10.00 | | | 10.00 | 10.00 |
| Silane coupling agent 2 | | | | | | | | | | 10.00 | 10.00 | | |
| Aroma oil | 30.00 | 20.00 | 20.00 | 0.00 | 45.00 | 30.00 | 20.00 | 20.00 | 20.00 | 10.00 | 20.00 | 20.00 | 20.00 |
| Zinc oxide | 3.00 | 3.00 | 3.00 | 3.00 | 3.00 | 3.00 | 3.00 | 3.00 | 3.00 | 3.00 | 3.00 | 3.00 | 3.00 |
| Sulfur | 1.00 | 1.00 | 1.00 | 1.00 | 1.00 | 1.00 | 1.00 | 1.00 | 1.00 | 1.00 | 1.00 | 1.00 | 1.00 |
| Vulcanization accelerator | 2.00 | 2.00 | 2.00 | 2.00 | 2.00 | 2.00 | 2.00 | 2.00 | 2.00 | 2.00 | 2.00 | 2.00 | 2.00 |

(continued)

| Table 5 | Reference Example 1B | Comparative Example 1B | Comparative Example 2B | Comparative Example 3B | Comparative Example 4B | Comparative Example 5B | Example 1B | Example 2B | Example 3B | Example 4B | Example 5B | Example 6B | Example 7B |
|---|---|---|---|---|---|---|---|---|---|---|---|---|---|
| Aromatic modified terpene resin | 10.00 | 10.00 | 10.00 | 10.00 | 10.00 | | 10.00 | 10.00 | 10.00 | 10.00 | 10.00 | 10.00 | 10.00 |
| Main groove area ratio | 23.0% | 23.0% | 23.0% | 23.0% | 23.0% | 23.0% | 23.0% | 23.0% | 23.0% | 23.0% | 23.0% | 28.0% | 15.0% |
| Wear resistance performance | 100 | 102 | 99 | 95 | 103 | 105 | 102 | 112 | 100 | 102 | 104 | 97 | 105 |
| Rolling performance | 100 | 99 | 103 | 130 | 90 | 106 | 105 | 108 | 104 | 108 | 104 | 108 | 108 |
| Dry Steering Stability Performance | 2.0 | 2.0 | 2.0 | 3.0 | 3.0 | 3.0 | 3.0 | 3.0 | 3.0 | 3.5 | 4.0 | 2.5 | 3.0 |
| Wet steering stability performance | 2.0 | 2.0 | 2.0 | 3.0 | 3.0 | 3.0 | 3.0 | 3.0 | 3.0 | 4.0 | 4.5 | 3.0 | 2.5 |
| Durability performance | 100 | 101 | 101 | 105 | 103 | 105 | 110 | 108 | 109 | 112 | 115 | 101 | 102 |

The details of the components in Table 5 are the same as those in Table 3.

As can be understood from Table 5, Examples 1B to 5B, in which the modified conjugated diene polymer and the specific conjugated diene rubber were used in combination and in which the main groove area ratio depth was within the specific range, exhibited excellent wear resistance performance, rolling performance, dry steering stability performance, wet steering stability performance, and durability performance.

In comparison of Examples 1B to 3B, Example 2B, in which the content of the modified conjugated diene polymer in the diene rubber was 30 mass% or greater and in which the content of the specific conjugated diene rubber in the diene rubber was 70 mass% or less, exhibited more superior wear resistance performance and rolling performance.

Furthermore, in comparison of Examples 1B, 4B, and 5B, Examples 4B and 5B, in which the silane coupling agent was represented by General Formula (S) described above, exhibited more superior dry steering stability performance, wet steering stability performance, and durability performance. Among these, Example 5B, in which the CTAB adsorption specific surface area of silica was from 160 to 300 $m^2/g$, exhibited more superior dry steering stability performance, wet steering stability performance, and durability performance.

On the other hand, Reference Example 1B and Comparative Examples 1B and 2B, which did not contain at least one of the modified conjugated diene polymer or the specific conjugated diene rubber; Comparative Example 3B, in which the modified conjugated diene polymer and the specific conjugated diene rubber were used in combination, but the content of the silica was less than 50 parts by mass per 100 parts by mass of the diene rubber; Comparative Example 4B, in which the modified conjugated diene polymer and the specific conjugated diene rubber were used in combination, but the content of the silica exceeded 150 parts by mass per 100 parts by mass of the diene rubber; Comparative Example 5B, which used the modified conjugated diene polymer and the specific conjugated diene rubber in combination but did not contain a specific aromatic modified terpene resin; Example 6B, in which the main groove area ratio exceeded 25.0%; and Example 7B, in which the main groove area ratio was less than 20.0%, exhibited insufficiencies in terms of at least one of dry steering stability performance or durability performance.

In comparison of Examples 1B and 6B, Example 1B, in which the main groove area ratio was 25.0% or less, exhibited more superior wear resistance, dry steering stability performance, and durability performance. Furthermore, in comparison of Examples 1B and 7B, Example 1B, in which the main groove area ratio was 20.0% or greater, exhibited more superior wear wet steering stability performance and durability performance.

Reference Signs List

1 Bead portion
2 Sidewall portion
3 Tire tread portion
4 Carcass layer
5 Bead core
6 Bead filler
7 Belt layer
8 Rim cushion
10 Pneumatic tire (tire)
12 Tread portion
12a Tread surface on tire outer side
12b Land portion
12c Main groove
14 Shoulder portion
16 Sidewall portion
18 Bead portion
20 Carcass layer
20a Body portion of carcass layer 20
20b Folded back portion of carcass layer 20
20e End portion of carcass layer 20
22 Belt layer
22a Inner belt layer
22b Outer belt layer
22e End portion of belt layer 22
24 Belt auxiliary reinforcing layer
28 Bead core

30 Bead filler
32 Tread rubber layer
34 Sidewall rubber layer
36 Rim cushion rubber layer
38 Inner liner rubber layer
R Cavity region
CL Tire equatorial plane

## Claims

1. A tire tread rubber composition comprising:
a diene rubber, silica, a silane coupling agent, and an aromatic modified terpene resin having a softening point of from 60 to 150°C;

   a content of the silica being from 50 to 150 parts by mass per 100 parts by mass of the diene rubber, a content of the silane coupling agent being from 2 to 20 mass% with respect to the content of the silica;
   the diene rubber comprising a modified conjugated diene polymer and a specific conjugated diene rubber, a content of the modified conjugated diene polymer in the diene rubber being from 10 to 50 mass%, a content of the specific conjugated diene rubber in the diene rubber being from 50 to 90 mass%;
   the modified conjugated diene polymer being a modified conjugated diene polymer obtained by modifying an active terminal of a conjugated diene polymer having a content of cis-1,4-bonds of 75 mol% or greater, using at least a hydrocarbyloxysilane compound;
   the specific conjugated diene rubber being a conjugated diene rubber obtained by bonding an active terminal of a conjugated diene polymer chain and a polyorganosiloxane;
   the conjugated diene polymer chain having a polymer block A and a polymer block B formed in a series with the polymer block A;
   the polymer block A comprising an isoprene unit and an aromatic vinyl unit, a content of the isoprene unit being from 80 to 95 mass%, a content of the aromatic vinyl unit being from 5 to 20 mass%, the weight average molecular weight being from 500 to 15000; and
   the polymer block B comprising a 1,3-butadiene unit and an aromatic vinyl unit.

2. The tire tread rubber composition according to claim 1, wherein
the silane coupling agent is represented by the General Formula (S):

$$(C_nH_{2n+1}O)_3\text{-Si-}C_mH_{2m}\text{-S-CO-}C_kH_{2k+1} \text{ —} \qquad \text{General Formula (S)}$$

   wherein, n represents an integer of from 1 to 3, m represents an integer of from 1 to 5, and k represents an integer of from 1 to 15.

3. The tire tread rubber composition according to claim 1 or 2, wherein the silica has a CTAB adsorption specific surface area of from 160 to 300 $m^2/g$.

4. A pneumatic tire that uses the tire tread rubber composition according to any one of claims 1 to 3.

5. A pneumatic tire that uses the tire tread rubber composition according to any one of claims 1 to 3 in a tire tread, wherein an average main groove depth is from 5.0 to 7.0 mm.

6. A pneumatic tire that uses the tire tread rubber composition according to any one of claims 1 to 3 in a tire tread, wherein a main groove area ratio is from 20.0 to 25.0%.

## Patentansprüche

1. Reifenlaufflächen-Kautschukzusammensetzung, umfassend:

   einen Dienkautschuk, Silica, einen Silan-Haftvermittler und einen aromatischen modifizierten Terpenharz mit einem Erweichungspunkt von 60 bis 150 °C;

wobei ein Gehalt an Silica von 50 bis 150 Massenteile pro 100 Massenteile des Dienkautschuks beträgt, wobei ein Gehalt an Silan-Haftvermittler von 2 bis 20 Masse-% in Bezug auf den Gehalt des Silicas beträgt;
wobei der Dienkautschuk ein modifiziertes konjugiertes Dienpolymer und einen spezifischen konjugierten Dienkautschuk umfasst, wobei ein Gehalt an modifiziertem konjugiertem Dienpolymer in dem Dienkautschuk von 10 bis 50 Masse-% beträgt, wobei ein Gehalt an spezifischem konjugiertem Dienkautschuk in dem Dienkautschuk von 50 bis 90 Masse-% beträgt;
wobei das modifizierte konjugierte Dienpolymer ein modifiziertes konjugiertes Dienpolymer ist, das durch Modifizieren eines aktiven Endes eines konjugierten Dienpolymers mit einem Gehalt an cis-1,4-Bindungen von 75 Mol-% oder mehr unter Verwendung mindestens einer Hydrocarbyloxysilanverbindung erhalten wird;
wobei der spezifische konjugierte Dienkautschuk ein konjugierter Dienkautschuk ist, der durch Binden eines aktiven Endes einer konjugierten Dienpolymerkette und eines Polyorganosiloxans erhalten wird;
wobei die konjugierte Dienpolymerkette einen Polymerblock A und einen Polymerblock B aufweist, der in einer Reihe mit dem Polymerblock A gebildet ist;
wobei der Polymerblock A eine Isopreneinheit und eine aromatische Vinyleinheit umfasst, wobei ein Gehalt an Isopreneinheit von 80 bis 95 Masse-% beträgt, ein Gehalt an aromatischer Vinyleinheit von 5 bis 20 Masse-% beträgt, wobei das Molekulargewicht (Gewichtsmittel) von 500 bis 15000 beträgt; und
wobei der Polymerblock B eine 1,3-Butadieneinheit und eine aromatische Vinyleinheit umfasst.

2. Reifenlaufflächen-Kautschukzusammensetzung gemäß Anspruch 1, wobei der Silan-Haftvermittler durch die allgemeine Formel (S) dargestellt wird:

$$(C_nH_{2n+1}O)_3\text{-Si-}C_mH_{2m}\text{-S-CO-}C_kH_{2k+1} \text{—} \qquad \text{Allgemeine Formel (S)}$$

wobei n für eine ganze Zahl von 1 bis 3 steht, m für eine ganze Zahl von 1 bis 5 steht und k für eine ganze Zahl von 1 bis 15 steht.

3. Reifenlaufflächen-Kautschukzusammensetzung gemäß Anspruch 1 oder 2, wobei das Silica eine spezifische CTAB-Adsorptionsoberfläche von 160 bis 300 $m^2/g$ aufweist.

4. Luftreifen, der die Reifenlaufflächen-Kautschukzusammensetzung gemäß einem der Ansprüche 1 bis 3 verwendet.

5. Luftreifen, der die Reifenlaufflächen-Kautschukzusammensetzung gemäß einem der Ansprüche 1 bis 3 in einer Reifenlauffläche verwendet, wobei
eine durchschnittliche Hauptrillentiefe von 5,0 bis 7,0 mm beträgt.

6. Luftreifen, der die Reifenlaufflächen-Kautschukzusammensetzung gemäß einem der Ansprüche 1 bis 3 in einer Reifenlauffläche verwendet, wobei
ein Hauptrillenflächenverhältnis von 20,0 bis 25,0 % beträgt.

**Revendications**

1. Composition de caoutchouc de bande de roulement de pneu comprenant :

un caoutchouc diénique, de la silice, un agent de couplage silane, et une résine terpénique à modification aromatique ayant un point de ramollissement allant de 60 à 150 °C ;
une teneur de la silice allant de 50 à 150 parties en masse pour 100 parties en masse du caoutchouc diénique, une teneur de l'agent de couplage silane allant de 2 à 20 % en masse par rapport à la teneur de la silice ;
le caoutchouc diénique comprenant un polymère diénique conjugué modifié et un caoutchouc diénique conjugué spécifique, une teneur du polymère diénique conjugué modifié dans le caoutchouc diénique allant de 10 à 50 % en masse, une teneur du caoutchouc diénique conjugué spécifique dans le caoutchouc diénique allant de 50 à 90 % en masse ;
le polymère diénique conjugué modifié étant un polymère diénique conjugué modifié obtenu en modifiant une terminaison active d'un polymère diénique conjugué ayant une teneur en liaisons cis-1,4 de 75 % molaires ou plus, en utilisant au moins un composé hydrocarbyloxysilane ;
le caoutchouc diénique conjugué spécifique étant un caoutchouc diénique conjugué obtenu par liaison d'une terminaison active d'une chaîne de polymère diénique conjugué et d'un polyorganosiloxane ;
la chaîne de polymère diénique conjugué ayant une séquence polymère A et une séquence polymère B formée

dans une série avec la séquence polymère A ;
la séquence polymère A comprenant un motif isoprène et un motif vinyle aromatique, une teneur du motif isoprène allant de 80 à 95 % en masse, une teneur du motif vinyle aromatique allant de 5 à 20 % en masse, la masse moléculaire moyenne en poids allant de 500 à 15 000 ; et
la séquence polymère B comprenant un motif 1,3-butadiène et un motif vinyle aromatique.

**2.** Composition de caoutchouc de bande de roulement de pneu selon la revendication 1, dans laquelle l'agent de couplage silane est représenté par la Formule générale (S) :

$$(C_nH_{2n+1}O)_3\text{-Si-}C_mH_{2m}\text{-S-CO-}C_kH_{2k+1}\text{ -} \qquad \text{Formule générale (S)}$$

dans laquelle, n représente un nombre entier allant de 1 à 3, m représente un nombre entier allant de 1 à 5, et k représente un nombre entier allant de 1 à 15.

**3.** Composition de caoutchouc de bande de roulement de pneu selon la revendication 1 ou 2, dans laquelle la silice a une surface spécifique d'adsorption de CTAB allant de 160 à 300 $m^2/g$.

**4.** Pneumatique qui utilise la composition de caoutchouc de bande de roulement de pneu selon l'une quelconque des revendications 1 à 3.

**5.** Pneumatique qui utilise la composition de caoutchouc de bande de roulement de pneu selon l'une quelconque des revendications 1 à 3 dans une bande de roulement de pneu, dans lequel
une profondeur moyenne de rainure principale va de 5,0 à 7,0 mm.

**6.** Pneumatique qui utilise la composition de caoutchouc de bande de roulement de pneu selon l'une quelconque des revendications 1 à 3 dans une bande de roulement de pneu, dans lequel
un rapport de surface de rainure principale va de 20,0 à 25,0 %.

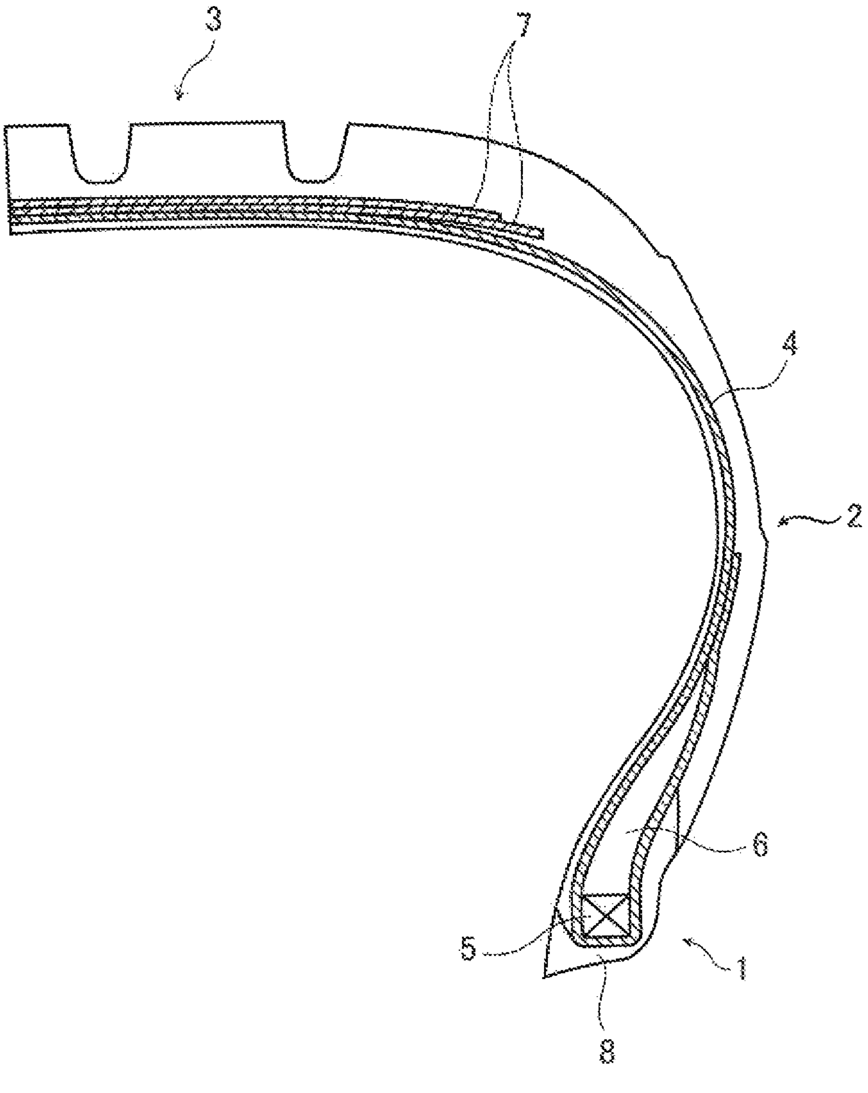


FIG. 1

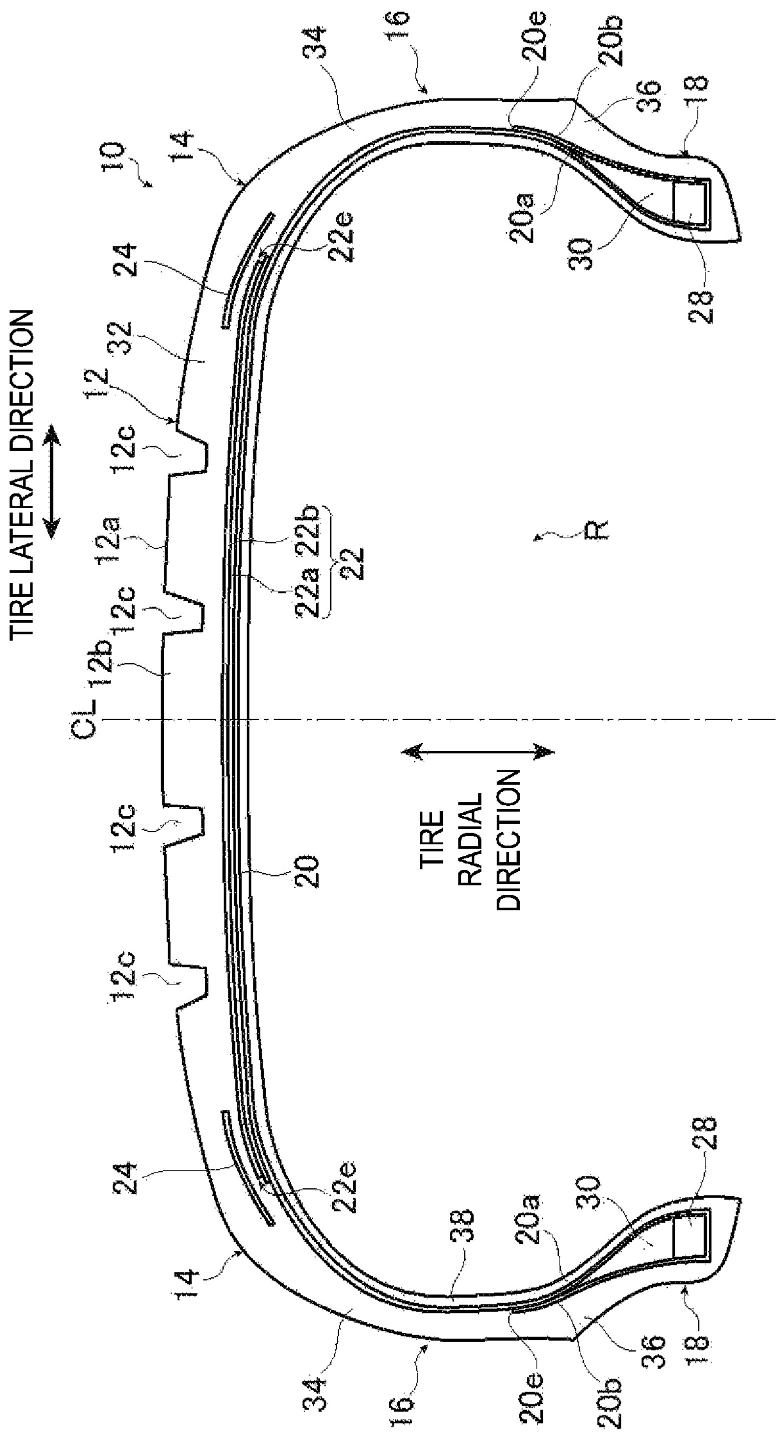
TIRE LATERAL DIRECTION
TIRE RADIAL DIRECTION
CL
R
10
12
12a
12b
12c
14
16
18
20
20a
20b
20e
22
22a
22b
22e
24
28
30
32
34
36
38

FIG. 2

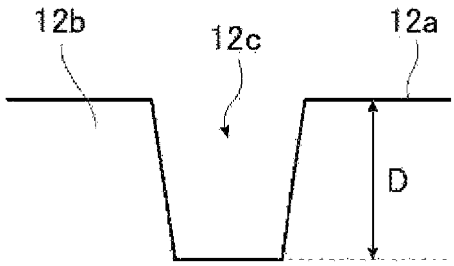


FIG. 3

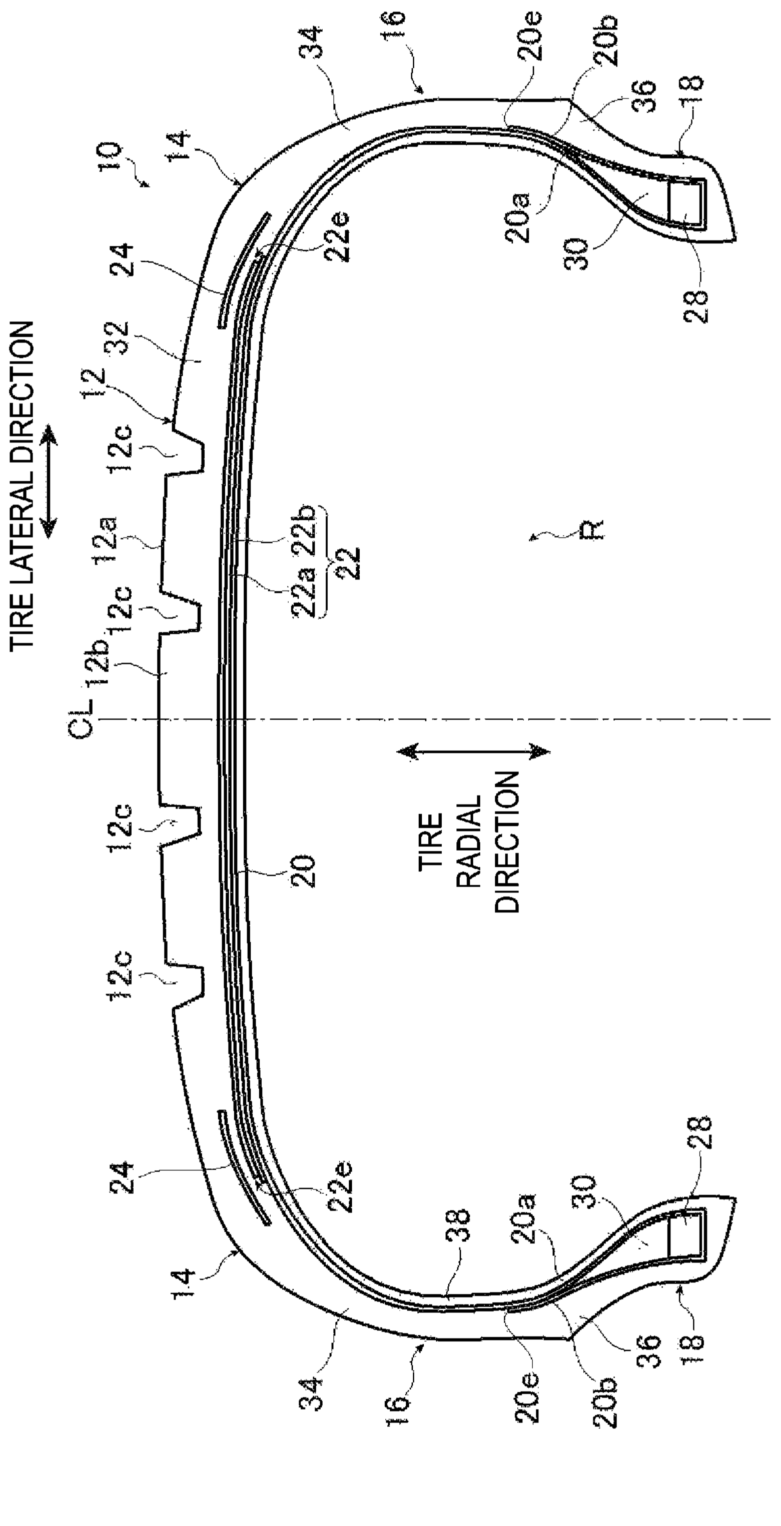
TIRE LATERAL DIRECTION
TIRE
RADIAL
DIRECTION
CL
10
12
12a
12b
12c
14
16
18
20
20a
20b
20e
22
22a
22b
22e
24
28
30
32
34
36
38
R

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016047887 A
- JP 5965657 B
- JP 2016047883 A